# EUROPEAN PATENT APPLICATION

(11) **EP 3 739 011 A1**
(43) Date of publication of application: **18.11.2020**
(21) Application number: 19738185.8
(22) Date of filing: 15.01.2019
(51) Int. Cl.: C09J 7/29, B32B 27/00, B63B 59/04, C09D 183/04, C09J 201/00, E02B 1/00

(54) **FILM FOR PREVENTING ADHESION OF AQUATIC ORGANISMS**

(30) Priority: 12.01.2018 JP 2018003182
(71) Applicant: NITTO DENKO CORPORATION, Ibaraki-shi Osaka 567-8680 (JP)
(72) Inventor: KURATA Naoki, Ibaraki-shi, Osaka 567-8680 (JP); NAITO Tomonari, Ibaraki-shi, Osaka 567-8680 (JP); SUZUKI Satoru, Ibaraki-shi, Osaka 567-8680 (JP)
(74) Representative: Grünecker Patent- und Rechtsanwälte PartG mbB
(86) International application number: PCT/JP2019/000952
(87) International publication number: WO 2019/139171

(57) **Abstract**

An aquatic organism adherence preventive film can be attached to an area to be prevented from adherence of aquatic organisms, through a pressure-sensitive adhesive layer thereof, and can reduce adherence of aquatic organisms by an antifouling layer thereof. However, conventional aquatic organism adherence preventive films are designed for an underwater structure (mainly, a boat/ship or the like) capable of moving through water at relatively high speeds. That is, there has been no film capable of adequately preventing adherence of aquatic organisms to a sensor over a long period of time, and capable of being easily peeled off from a submersible sensor unit while preventing a pressure-sensitive adhesive from remaining on a housing of the submersible sensor unit. The present invention provides an aquatic organism adherence preventive film capable of preventing adherence of aquatic organisms even when used in an underwater structure receiving almost no a water flow resistance, e.g., an underwater structure involving almost no underwater movement, for about half a year, and capable of being easily peeled off from a submersible sensor unit while preventing a pressure-sensitive adhesive from remaining on a housing of the submersible sensor unit.

## Description

### TECHNICAL FIELD

The present invention relates to a film for preventing adherence of aquatic organisms. More particularly, the present invention relates to an aquatic organism adherence preventive film which is suited to preventing marine organisms from adhering to and propagating on an underwater structure receiving almost no water flow resistance.

### BACKGROUND ART

In an underwater structure such as a boat/ship or a buoy provided with a sensor, it is often the case that aquatic organisms such as barnacles and seaweed adhere to and propagate on a portion thereof in contact with seawater. If such adherence and propagation of aquatic organisms are left to nature, they cause a problem such as an increase in fluid resistance of the boat/ship, or deterioration in sensing function of the sensor. Further, work of removing the adhered aquatic organisms requires a lot of effort and time, leading to economic losses. Further, there arises another problem that, along with movement of the boat/ship or the like, the aquatic organisms adhered to a boat/ship or the like are spread over other sea areas in which such aquatic organisms never originally live.

As conventional techniques for preventing these problems, there is a pressure-sensitive adhesive tape-like aquatic organism adherence preventive film which is usable in such a manner that it is attached to an area to be prevented from adherence of aquatic organisms (see the following Patent Documents 1 to 4). For example, an aquatic organism adherence preventive film disclosed in the Patent Document 1 comprises: a pressure-sensitive adhesive layer; a substrate layer provided on the pressure-sensitive adhesive layer and containing an ionomer resin; and an antifouling layer provided on the substrate layer and containing an addition-type silicone resin and a polyether-modified silicone resin. The aquatic organism adherence preventive film can be attached to an area to be prevented from adherence of aquatic organisms, through the pressure-sensitive adhesive layer, and can reduce adherence of aquatic organisms by the antifouling layer.

### CITATION LIST

### [Patent Document]

Patent Document 1: JP 6219551B
Patent Document 2: JP 2014-185268A
Patent Document 3: JP 2015-174902A
Patent Document 4: JP 2016-108414A

### SUMMARY OF INVENTION

### [Technical Problem]

However, the conventional aquatic organism adherence preventive films are designed for an underwater structure (mainly, a boat/ship or the like) capable of moving through water at relatively high speeds. That is, there has been no film capable of adequately preventing adherence of aquatic organisms to the sensor over a long period of time, and capable of being easily peeled off from a submersible sensor unit while preventing a pressure-sensitive adhesive from remaining on a housing of the submersible sensor unit.

Further, during maintenance of the underwater structure, the attached aquatic organism adherence preventive film is replaced with a new one. In this case, there arises a problem that the substrate layer of the film is peeled off from the pressure-sensitive adhesive layer, and, when the film is peeled off from the underwater structure, a pressure-sensitive adhesive remains on an area from which the film is peeled off.

It is therefore a primary object of the present invention to provide an aquatic organism adherence preventive film capable of preventing adherence of aquatic organisms even when used in an underwater structure receiving almost no a water flow resistance, e.g., an underwater structure involving almost no underwater movement, for about half a year, and capable of being easily peeled off from a submersible sensor unit while preventing a pressure-sensitive adhesive from remaining on a housing of the submersible sensor unit.

### [Solution to Technical Problem]

In order to achieve the above problems, according to one aspect of the present invention, there is provided an aquatic organism adherence preventive film to be attached to an underwater structure. The aquatic organism adherence preventive film comprises: a pressure-sensitive adhesive layer to be bonded to the underwater structure; a substrate layer on the pressure-sensitive adhesive layer; and an antifouling layer on the substrate, wherein: a water contact angle with respect to the antifouling layer as measured after 5 minutes have elapsed since operation of causing the antifouling layer to be in contact with methanol for 20 minutes, and then dropping water on the antifouling layer is 80 degrees or less; a ratio of a tensile breaking strength (N/20 mm) as measured after immersion in pure water at 60°C for 4 days to an adhesive force (N/20mm) with respect to the underwater structure, as measured after immersion in pure water at 60°C for 4 days, is 1.5 or more; and a 1-mm square cross-cut stretching-caused peeling degree of the antifouling layer with respect to the substrate layer is 0.30 or less.

Preferably, the aquatic organism adherence preventive film of the present invention, the antifouling layer contains silicone resin.

More preferably, in the above aquatic organism adherence preventive film, the silicone resin is addition-type silicone resin.

More preferably, in the above aquatic organism adherence preventive film, the antifouling layer further contains silicone oil.

More preferably, in the above aquatic organism adherence preventive film, the silicone oil includes polyether-modified silicone oil.

Preferably, the aquatic organism adherence preventive film of the present invention, the substrate layer comprises a polyethylene-based ionomer substrate.

Preferably, the aquatic organism adherence preventive film of the present invention, the antifouling layer has a thickness of 10 µm to 1000 µm.

Preferably, the aquatic organism adherence preventive film of the present invention,
the pressure-sensitive adhesive layer has a thickness of 1 µm to 1000 µm.

Preferably, the aquatic organism adherence preventive film of the present invention, the water contact angle with respect to the antifouling layer as measured after 5 minutes have elapsed since operation of causing the antifouling layer to be in contact with methanol for 20 minutes, and then dropping water on the antifouling layer is 75 degrees or less.

Preferably, the aquatic organism adherence preventive film of the present invention, the water contact angle with respect to the antifouling layer as measured after 5 minutes have elapsed since operation of causing the antifouling layer to be in contact with methanol for 20 minutes, and then dropping water on the antifouling layer is 70 degrees or less.

Preferably, the aquatic organism adherence preventive film of the present invention, the ratio of the tensile breaking strength (N/20 mm) as measured after immersion in pure water at 60°C for 4 days to the adhesive force (N/20mm) with respect to the underwater structure, as measured after immersion in pure water at 60°C for 4 days, is 2.0 or more.

### [Effect of Invention]

The present invention provides the aquatic organism adherence preventive film, wherein: the water contact angle with respect to the antifouling layer as measured after 5 minutes have elapsed since operation of causing the antifouling layer to be in contact with methanol for 20 minutes and then dropping water on the antifouling layer is 80 degrees or less; the ratio of the tensile breaking strength (N/20 mm) as measured after immersion in pure water at 60°C for 4 days to the adhesive force (N/20mm) with respect to the underwater structure, as measured after immersion in pure water at 60°C for 4 days, is 1.5 or more; and the 1-mm square cross-cut stretching-caused peeling degree of the antifouling layer with respect to the substrate layer is 0.30 or less, whereby the aquatic organism adherence preventive film can prevent adherence of aquatic organisms even when attached to an underwater structure receiving almost no a water flow resistance, for at least about half a year, and can be easily peeled off from a submersible sensor unit while preventing a pressure-sensitive adhesive from remaining on a housing of the submersible sensor unit.

### BRIEF DESCRIPTION OF DRAWINGS

FIG. 1 is a sectional view of a laminate composing an aquatic organism adherence preventive film according to one embodiment of the present invention.
FIG. 2 is a diagram showing the external appearance of the aquatic organism adherence preventive film in the form of tape.
FIG. 3 is a diagram showing the external appearance of a submersible sensor unit as one example of an underwater structure.
FIG. 4 is a diagram showing the state of work of attaching the aquatic organism adherence preventive film to the submersible sensor unit.
FIG. 5 is a graph showing a relationship between a water contact angle of an antifouling layer of the aquatic organism adherence preventive film and adherence of organisms.
FIG. 6 is a graph showing a relationship between seawater immersion and methanol immersion of the antifouling layer of the aquatic organism adherence preventive film.
FIG. 7 is a plot diagram showing a relationship among, the amount of addition (parts) of hydrophilic silicone oil contained in the aquatic organism adherence preventive film, the addition amount (weight part(s)) of hydrophobic silicone oil contained in the aquatic organism adherence preventive film, and a stretch ratio at peel-off of the antifouling layer.

### DESCRIPTION OF EMBODIMENTS

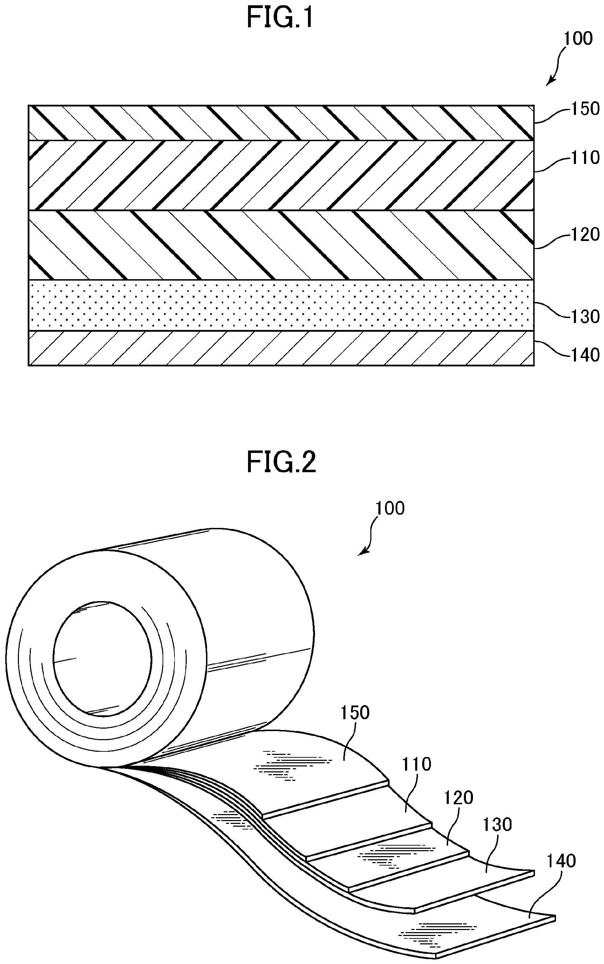

With reference to the drawings, an embodiment of the present invention will now be described. FIG. 1 is a sectional view of a laminate composing an aquatic organism adherence preventive film according to one embodiment of the present invention. FIG. 2 is a diagram showing the external appearance of the aquatic organism adherence preventive film in the form of tape. The aquatic organism adherence preventive film 100 is a laminate comprising a substrate layer 120, a pressure-sensitive adhesive layer 130 bonded to one surface of the substrate layer 120, and an antifouling layer 110 bonded to the substrate layer 120 on the side opposite to the pressure-sensitive adhesive layer 130. Additionally, a release liner 140 is releasably bonded to the pressure-sensitive adhesive layer 130 on the side opposite to the substrate layer 120. Further, a protective layer 150 is releasably bonded to the antifouling layer 110 on the side opposite to the substrate layer 120.

When using the aquatic organism adherence preventive film 100, the release liner 140 is peeled off from the pressure-sensitive adhesive layer 130 to allow the aquatic organism adherence preventive film 100 to be attached to an underwater structure or the like through the exposed pressure-sensitive adhesive layer 130, and the protective layer 150 is peeled off from the antifouling layer 110 so as to prevent adherence of aquatic organisms by the exposed antifouling layer 110.

Generally, when applying the aquatic organism adherence preventive film to an underwater structure movable at relatively high speeds such as a boat/ship or the like, even if aquatic organisms adhere to the antifouling layer, the aquatic organisms can be peeled off to some extent by water flow arising from movement of the boat/ship or the like. On the other hand, when applying the aquatic organism adherence preventive film to an underwater structure such as a buoy floating on the sea surface, such peel-off cannot be expected, because the buoy merely drifts with ocean current without moving by itself, and thereby a water flow hitting the buoy is weak. Therefore, as a design for preventing adherence of aquatic organisms to not only an underwater structure capable moving by itself, such as a boat/ship, but also an underwater structure drifting with ocean current, such as a buoy, the aquatic organism adherence preventive film 100 according to this embodiment comprises the antifouling layer 110 whose surface is hydrophilized by hydrophilic silicone oil (hereinafter referred to simply as "hydrophilic oil"),

Preferably, the antifouling layer 110 contains a silicone resin. The content rate of the silicone resin in the antifouling layer 110 is preferably from 30 weight% to 90 weight%, more preferably from 40 weight% to 85 weight%, further preferably from 45 weight% to 80 weight%. Since the content rate of the silicone resin in the antifouling layer falls within the above range, it is possible to more sufficiently develop an antifouling effect of the antifouling layer, and more sufficiently develop mechanical properties of the antifouling layer. The silicone resin may be a condensed-type silicone resin, or may be an addition-type silicone resin.

Preferably, the antifouling layer 110 further contains silicone oil. The content of the silicone oil with respect to 100 weight parts of the silicone resin is preferably from 20 weight parts to 150 weight parts, more preferably from 30 weight parts to 140 weight parts, further preferably from 50 weight parts to 130 weight parts.

As the silicone oil, it is possible to use: dimethyl silicone oil in which all groups are methyl groups; methylphenyl silicone oil obtained by substituting a part of the methyl groups of the dimethyl silicone oil with a phenyl group; amino-modified silicone oil obtained by substituting a part of the methyl groups of the dimethyl silicone oil with a monoamine, diamine or aminopolyether group; epoxy-modified silicone oil obtained by substituting a part of the methyl groups of the dimethyl silicone oil with an epoxy, alicyclic epoxy, epoxy polyether or epoxy aralkyl group; carbinol-modified silicone oil obtained by substituting a part of the methyl groups of the dimethyl silicone oil with a carbinol group; mercapto-modified silicone oil obtained by substituting a part of the methyl groups of the dimethyl silicone oil with a mercapto group; carboxyl-modified silicone oil obtained by substituting a part of the methyl groups of the dimethyl silicone oil with a carboxyl group; methacryl-modified silicone oil obtained by substituting a part of the methyl groups of the dimethyl silicone oil with a methacryl group; polyether-modified silicone oil obtained by substituting a part of the methyl groups of the dimethyl silicone oil with a polyether group; long-chain alkyl-modified silicone oil obtained by substituting a part of the methyl groups of the dimethyl silicone oil with a long-chain alkyl or alkyl aralkyl group; higher fatty acid-modified silicone oil obtained by substituting a part of the methyl groups of the dimethyl silicone oil with a higher fatty acid ester group; or fluoroalkyl-modified silicone oil obtained by substituting a part of the methyl groups of the dimethyl silicone oil with a fluoroalkyl group. Further, the methylphenyl silicone oil, the polyether-modified silicone oil, or the long-chain alkyl-modified silicone oil may be used. Further, from a viewpoint of adhesion, the methylphenyl silicone oil, the polyether-modified silicone oil, or the long-chain alkyl-modified silicone oil may also be used. The above silicone oils may be used independently or in combination of two or more of them. Preferably, the polyether-modified silicone oil comprises a PEG chain having an alkyl group, at a terminal thereof, wherein more preferably, the alkyl group is a methyl group.

As one practical example, the antifouling layer 110 may comprise an addition-type silicone resin, hydrophobic silicone oil, and hydrophilic oil. Here, the term "hydrophilic oil" means oil having a hydrophilic functional group. In another practical example, condensed-type silicone oil may be used instead of the addition-type silicone resin. As the hydrophobic silicone oil (hereinafter referred to simply as "hydrophobic oil"), it is possible to use, e.g., dimethyl silicone oil, and alkyl-modified silicone oil, and, as the hydrophilic oil, it is possible to use, e.g., polyether-modified silicone oil, and carbinol-modified silicone oil.

Although the thickness of the antifouling layer 110 is not particularly limited, it is preferably from 10 to 1000 µm, more preferably from 20 to 500 µm, further preferably from 30 to 300 µm, particularly preferably from 50 to 200 µm.

The substrate layer may be comprised of, e.g., a polyurethane resin, a polyurethane acrylic resin, a rubber-based resin, a polyvinyl chloride resin, a polyvinyl acetate resin, a polyester resin, a silicone resin, a fluorine resin, a polyamide resin, a polyolefin resin (polyethylene, polypropylene, etc.), or an ionomer resin. The ionomer resin is an ionic polymer comprising a hydrophobic polymer main chain, and an ionic group of a metal or ammonium salt of a carboxylic acid, a sulfonic acid or the like partially included as a side chain in a small amount, and is a resin having an ionic cross-linking in the molecule

As one practical example, the substrate layer 120 may be comprised of a polyethylene-based ionomer. Although the thickness of the substrate layer 120 is not particularly limited, it is preferably from 10 to 1000 µm, more preferably from 20 to 500 µm, further preferably from 30 to 400 µm, particularly preferably from 50 to 300 µm.

Examples of the pressure-sensitive adhesive layer 130 include an acrylic resin-based pressure-sensitive adhesive, an epoxy resin-based pressure-sensitive adhesive, an amino resin-based pressure-sensitive adhesive, a vinyl resin-based (e.g., vinyl acetate-based polymer) pressure-sensitive adhesive, a curable acrylic resin-based pressure-sensitive adhesive, and a silicone resin-based pressure-sensitive adhesive. As one practical example, the pressure-sensitive adhesive layer 130 may be an acrylic resin-based pressure-sensitive adhesive composing an acrylic polymer or the like. For example, the acrylic polymer is obtained by polymerizing a monomer composition consisting mainly of (meth)acrylic acid ester. As used therein, the term "(meth)acryl" in "(meth)acrylic acid" or the like means "acryl and/or methacryl".

Examples of the (meth)acrylic acid ester include methyl (meth)acrylate, ethyl (meth)acrylate, propyl (meth)acrylate, isopropyl (meth)acrylate, butyl (meth)acrylate, isobutyl (meth)acrylate, sec-butyl (meth)acrylate, t-butyl (meth)acrylate, pentyl (meth)acrylate, neopentyl (meth)acrylate, isoamyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, and octadecyl (meth)acrylate. These alkyl (meth)acrylic acid esters may be used independently or in combination of two or more of them.

The monomer composition may further comprise: a carboxyl group-containing monomer such as (meth)acrylic acid; a hydroxyl group-containing monomer such as 2-hydroxybutyl (meth)acrylate; and a cyclic nitrogen-containing monomer such as N-vinyl pyrrolidone or N-vinyl-ε-caprolactam.

Although the thickness of the pressure-sensitive adhesive layer 130 is not particularly limited, it is preferably from 1 to 1000 µm, more preferably from 5 to 500 µm, further preferably from 10 to 400 µm, particularly preferably from 20 to 300 µm.

With regard to each of the antifouling layer 110, the substrate layer 120 and the pressure-sensitive adhesive layer 130 of the aquatic organism adherence preventive film 100, the composition and others thereof will be described in detail in the aftermentioned Examples.

With regard to the antifouling layer 110 on the substrate layer 120, it is considered that a layer of hydrophobic silicone oil is formed on one surface thereof on the side opposite to the other surface in contact with the substrate layer 120, wherein a layer of hydrophilic silicone oil is formed on the layer of hydrophobic silicone oil, and a hydration layer is formed on the layer of hydrophilic silicone oil. Further, the hydration layer is presumed to serve as the surface of the antifouling layer 110 to prevent adherence of aquatic organisms such as barnacles and seaweeds.

The amount of attenuation of a 1 MHz ultrasonic wave due the aquatic organism adherence preventive film pertaining to the present invention is preferably 5.0 db or less, more preferably 4.5 db or less, particularly preferably 4.0 db or less. Further, from a viewpoint of facilitating visual check of the presence or absence of an air bubble on an attachment surface, a transmissivity of the aquatic organism adherence preventive film pertaining to the present invention, with respect to visible light having a wavelength rage of 400 to 800 nm is preferably 80% or more, more preferably 85% or more, particularly preferably 90% or more. Considering that an air bubble on the attachment surface leads to deterioration in the sensitivity of the sensor and deterioration in adhesion, it is preferable to attain a situation where there is no air bubble.

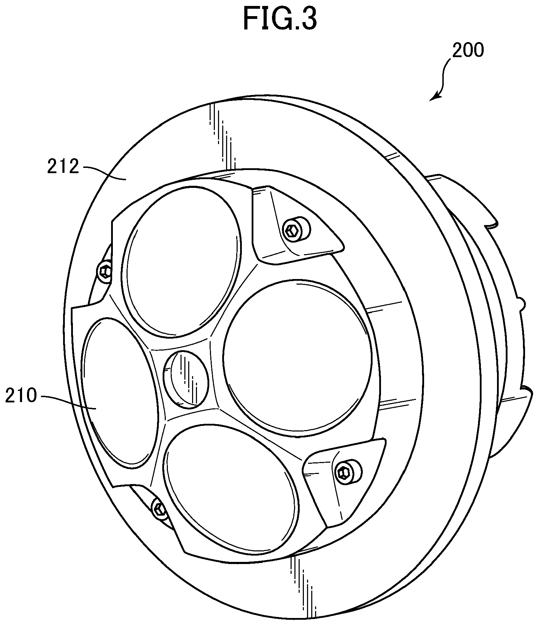

FIG. 3 is a diagram showing the external appearance of a submersible sensor unit as one example of an underwater structure. FIG. 3 shows a multi-layer flow direction/velocity meter, called "acoustic Doppler current profiler (ADCP)". The ADCP is capable of measuring the flow volume and velocity of oceanic current, tidal current, river current or the like, by utilizing the Doppler effect of ultrasonic waves. For example, when the ADCP is used for a survey intended to observe the flow volume, flow velocity or the like of ocean current in a specific sea area, the ADCP is equipped in, e.g., a drifting buoy for performing observation while drifting on the sea surface, or an anchored buoy which is fixed to the seabed via an anchor, and used as a submersible sensor unit. Further, the turbidity meter configured to optically perform measurement can also be used as a submersible sensor unit.

The submersible sensor unit 200 comprises a housing having at least one sensing opening. The submersible sensor unit 200 also comprises a sensor 210 disposed inside the housing such that a sensing face thereof faces the sensing opening of the housing. A mounting member 212 protruding in flange form from the housing of the submersible sensor unit 200 can be used for fixing the submersible sensor unit 200 to a buoy or a boat/ship.

Generally, in a case where a submersible sensor unit such as a turbidity meter is equipped in an underwater structure drifting on the sea, such as a buoy, it is mainly used for fixed-point observation, and thus the flow of water hitting this submersible sensor unit is not so strong, differently from another type of submersible sensor unit equipped in a boat/ship to perform observation while moving. Therefore, if the fixed-point observation is performed for a long period of time in a state in which aquatic organisms adhering to the submersible sensor unit are not swept away, a large amount of aquatic organisms adhere to the submersible sensor unit and propagate to cover a sensing part thereof configured to emit an ultrasonic wave or light therefrom, thereby impeding a sensing function thereof. Therefore, it is necessary to attach the aquatic organism adherence preventive film to the sensing part of the submersible sensor unit.

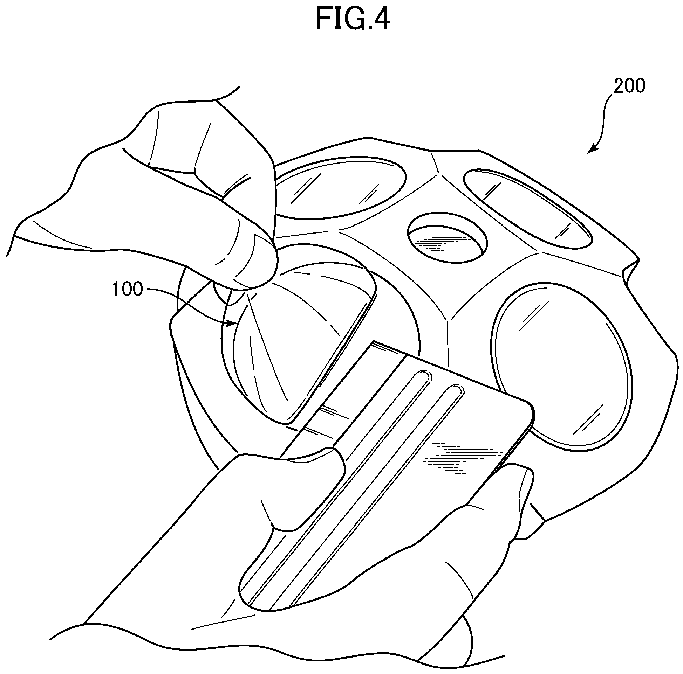

FIG. 4 is a diagram showing the state of work of attaching the aquatic organism adherence preventive film to the submersible sensor unit. The aquatic organism adherence preventive film 100 is attached to a sensing face of the sensor 200 or the housing of the submersible sensor unit 200, such that it closes the sensing opening of the housing of the submersible sensor unit 200. The attachment of the aquatic organism adherence preventive film 100 can be performed using a jig or the like. The aquatic organism adherence preventive film 100 has transmissibility (permeability) with respect to at least one of light and a sonic wave.

### EXAMPLES

The present invention will now be described in detail based on examples of an antifouling layer-including pressure-sensitive adhesive film (aquatic organism adherence preventive film). However, it should be noted that the present invention is not limited to the following examples, as long as it does not depart from the spirit and scope thereof as set forth in appended claims. A list of Inventive Examples and Comparative Examples is shown in Table 1.

**TABLE 1**

| | Composition of Antifouling Layer (weight part) | | | | | | | | | | | | Substrate | | Pressure Sensitive Adhesive | |
|---|---|---|---|---|---|---|---|---|---|---|---|---|---|---|---|---|
| | Silicone Resin | | | Hydrophobic Silicone Oil | | | hydrophilic Silicone Oil | | | | Others | Thickness µm | Type | Thickness µm | Composition | Thickness µm |
| | KE-1935 (Addition Type) | KE-1950 (Addition Type) | KE-445 (Condensed Type) | KF96-100cs | KF415 | KF50-100cs | KF6013 | KF6015 | KF6016 | KF6017 | Liquid Paraffin | | | | | |
| Inventive Example 1 | 100 | | | 35 | 20 | | | 10 | 5 | | | 100 | Ionomer | 100 | 2EHA/NVP | 50 |
| Inventive Example 2 | 100 | | | 45 | 20 | | | 10 | | | | 100 | Ionomer | 100 | 2EHA/NVP | 50 |
| Inventive Example 3 | 100 | | | 40 | 20 | | 10 | | | | | 100 | Ionomer | 100 | 2EHA/NVP | 50 |
| Inventive Example 4 | 100 | | | 40 | 20 | | | | | 10 | | 100 | Ionomer | 100 | 2EHA/NVP | 50 |
| Inventive Example 5 | 100 | | | 65 | | | | | 5 | | | 100 | Ionomer | 100 | 2EHA/NVP | 50 |
| Inventive Example 6 | 100 | | | 35 | 8 | | | 4 | 2 | | | 100 | Ionomer | 100 | 2EHA/NVP | 50 |
| Inventive Example 7 | 100 | | | 35 | 20 | | | 10 | 5 | | | 50 | Ionomer | 100 | 2EHA/NVP | 50 |
| Inventive Example 8 | 100 | | | 35 | 20 | | | 10 | 5 | | | 200 | Ionomer | 100 | 2EHA/NVP | 50 |
| Inventive Example 9 | 100 | | | 35 | 20 | | | 10 | 5 | | | 100 | Ionomer | 100 | 2EHA/NVP | 20 |
| Inventive Example 10 | 100 | | | 35 | 20 | | | 10 | 5 | | | 100 | Ionomer | 100 | 2EHA/NVP | 300 |
| Inventive Example 11 | 100 | | | 35 | 20 | | | 10 | 5 | | | 100 | Ionomer | 50 | 2EHA/NVP | 50 |
| Inventive Example 12 | 100 | | | 35 | 20 | | | 10 | 5 | | | 100 | Ionomer | 300 | 2EHA/NVP | 50 |
| Inventive Example 13 | 100 | | | 35 | 20 | | | 10 | 5 | | | 100 | PVC/PV Ac with primer | 30 | 2EHA/NVP | 50 |
| Inventive Example 14 | 100 | | | 35 | 20 | | | 10 | 5 | | | 100 | PVC with primer | 100 | 2EHA/NVP | 50 |
| Inventive Example 15 | 100 | | | 35 | 20 | | | 10 | 5 | | | 100 | PET with primer | 38 | 2EHA/NVP | 50 |
| Inventive Example 16 | 100 | | | 35 | 20 | | | 10 | 5 | | | 100 | Urethane with primer | 100 | 2EHA/NVP | 50 |
| Inventive Example 17 | 100 | | | 35 | 20 | | | 10 | 5 | | | 100 | Urethane with primer | 100 | 2EHA/AA | 50 |
| Inventive Example 18 | | | 100 | 65 | | | | | 5 | | | 100 | Ionomer | 100 | 2EHA/NVP | 50 |
| Comprative Example 1 | 100 | | | 70 | | | | | | | | 100 | Ionomer | 100 | 2EHA/NVP | 50 |
| Comprative Example 2 | 100 | | | 26 | 20 | | | | 1 | | | 100 | Ionomer | 100 | 2EHA/NVP | 50 |
| Comprative Example 3 | 100 | | | 35 | 20 | | | 10 | 5 | | | 100 | Urethane | 100 | 2EHA/NVP | 50 |
| Comprative Example 4 | 100 | | | 35 | 20 | | | 10 | 5 | | | 100 | PVC/PV Ac with primer | 18 | 2EHA/NVP | 50 |
| Comprative Example 5 | | | 100 | | | 10 | | | | | | 150 | Urethane Acrylic | 150 | 2EHA/NVP | 50 |
| Comprative Example 6 | | 100 | | 60 | | | | | | 30 | 5 | 100 | Urethane | 100 | 2EHA/AA | 50 |
| Comprative Example 7 | | 100 | | 75 | | | | | | 5 | 5 | 100 | Urethane | 100 | 2EHA/AA | 50 |
| Comprative Example 8 | | 100 | | 70 | | | | | | 20 | | 100 | Ionomer | 100 | 2EHA/AA | 50 |

### [Production Example 1]

100 weight parts of toluene, 60 weight parts of dicyclopentanyl methacrylate (trade name "FA-513M", manufactured by Hitachi Chemical Co., Ltd.), 40 weight parts of methyl methacrylate, and 3 weight parts of thioglycollate as a chain transfer agent were put into a four-necked flask as a reaction vessel equipped with a cooling tube, a nitrogen inlet tube, a thermometer, and a stirring device. Subsequently, the resulting mixture was stirred under a nitrogen atmosphere at 70°C for 1 hour, and then 0.2 weight part of azobisisobutyronitrile as a thermal polymerization initiator was put therein. The resulting mixture was subjected to a reaction at 70°C for 2 hours, and then to a reaction at 80°C for 2 hours. Subsequently, the resulting reacted liquid was put into and dried by an atmosphere at a temperature of 130°C to remove toluene, the chain transfer agent, and unreacted monomers, thereby obtaining a solid acrylic polymer.

### [Inventive Example 1]

### < Production of Laminate of Antifouling Layer / Substrate Layer >

100 weight parts (agent A: 50 weight parts, agent B: 50 weight parts) of silicone resin (addition-type liquid silicone resin, trade name "KE-1935", manufactured by Shin-Etsu Chemical Co. Ltd.), 35 weight parts of dimethyl silicone oil (trade name "KF96-100cs", manufactured by Shin-Etsu Chemical Co. Ltd.), 20 weight parts of alkyl-modified silicone oil (trade name "KF415", manufactured by Shin-Etsu Chemical Co. Ltd.), 10 weight parts of polyether-modified silicone oil (trade name "KF6015", manufactured by Shin-Etsu Chemical Co. Ltd.), and 5 weight parts of polyether-modified silicone oil (trade name "KF6016", manufactured by Shin-Etsu Chemical Co. Ltd.), were mixed together, and the resulting mixture was steered at room temperature (23°C) for 5 minutes to obtain an antifouling layer-forming material liquid. The obtained antifouling layer-forming material liquid was applied onto the surface of an ionomer substrate (trade name "Himilan 1855", manufactured by Dupont-Mitsui Polychemicals Co., Ltd., thickness: 100 µm), using an applicator, and then cured at 140°C for 2 minutes to obtain a 200 µm-thick, antifouling layer-attached substrate layer (antifouling layer (thickness: 100 µm)/substrate layer (thickness: 100 µm)).

### < Production of Pressure-Sensitive Adhesive Layer)

80 weight parts of 2-ethylhexyl acrylate (manufactured by Toagosei Co., Ltd.), and 20 weight parts of N-vinyl-2-pyrrolidone (manufactured by Nippon Shokubai Co., Ltd.) were put into a reaction vessel equipped with a cooling tube, a nitrogen inlet tube, a thermometer and a stirring device. Then, 0.05 weight parts of 2,2-dimethoxy-1,2-diphenylethan-1-one (trade name "Irgacure 651", manufactured by BASF) as a photopolymerization initiator was put thereinto and dispersed therein, and, under a nitrogen stream, the resulting dispersion mixture was subjected to UV irradiation from thereabove, while being stirred, to convert a part of monomers into a polymer, thereby adjusting the viscosity thereof to a coatable level to obtain an acrylic monomer-polymer mixture. 10 weight parts of the acrylic polymer obtained in Production Example 1, and 0.32 weight parts of dipentaerythritol hexaacrylate (trade name "A-DPH", manufactured by Shin-Nakamura Chemical Co., Ltd.), were put into the obtained acrylic monomer-polymer mixture. The resulting resin composition was applied to the surface of a separator (trade name "MRF38", manufactured by Mitsubishi Plastics, Inc., thickness: 38 µm) using an applicator. Then, after bonding a cover separator (trade name "MRF38", manufactured by Mitsubishi Plastics, Inc., thickness: 38 µm) to the applied resin composition by a hand roller, the resin composition was irradiated with ultraviolet light from an ultraviolet lamp (ultraviolet illuminance: 3.4 mW/cm², cumulative dose: 2,000 mJ/cm²) to obtain a 50 µm-thick pressure-sensitive adhesive composition.

### < Production of Antifouling Layer-Including Pressure-Sensitive Adhesive Film >

The pressure-sensitive adhesive layer obtained in Inventive Example 1 was bonded to the substrate layer of the 200 µm-thick, antifouling layer-attached substrate layer (antifouling layer (thickness: 100 µm)/substrate layer (thickness: 100 µm)) obtained in Inventive Example 1, using a laminator to obtain an antifouling layer-including pressure-sensitive adhesive film consisting of "antifouling layer (thickness: 100 µm)/substrate layer (thickness: 100 µm)/ pressure-sensitive adhesive layer (thickness: 50 µm)).

### [Inventive Example 2]

### < Production of Laminate of Antifouling Layer / Substrate Layer >

100 weight parts (agent A: 50 weight parts, agent B: 50 weight parts) of silicone resin (addition-type liquid silicone resin, trade name "KE-1935", manufactured by Shin-Etsu Chemical Co. Ltd.), 45 weight parts of dimethyl silicone oil (trade name "KF96-100cs", manufactured by Shin-Etsu Chemical Co. Ltd.), 20 weight parts of alkyl-modified silicone oil (trade name "KF415", manufactured by Shin-Etsu Chemical Co. Ltd.), and 10 weight parts of polyether-modified silicone oil (trade name "KF6015", manufactured by Shin-Etsu Chemical Co. Ltd.) were mixed together, and the resulting mixture was steered at room temperature (23°C) for 5 minutes to obtain an antifouling layer-forming material liquid. The obtained antifouling layer-forming material liquid was applied onto the surface of an ionomer substrate (trade name "Himilan 1855", manufactured by Dupont-Mitsui Polychemicals Co., Ltd., thickness: 100 µm), using an applicator, and then cured at 140°C for 2 minutes to obtain a 200 µm-thick, antifouling layer-attached substrate layer (antifouling layer (thickness: 100 µm)/substrate layer (thickness: 100 µm)).

### < Production of Antifouling Layer-Including Pressure-Sensitive Adhesive Film >

The pressure-sensitive adhesive layer obtained in Inventive Example 1 was bonded to the substrate layer of the 200 µm-thick, antifouling layer-attached substrate layer (antifouling layer (thickness: 100 µm)/substrate layer (thickness: 100 µm)) obtained in Inventive Example 2, using a laminator to obtain an antifouling layer-including pressure-sensitive adhesive film consisting of "antifouling layer (thickness: 100 µm)/substrate layer (thickness: 100 µm)/ pressure-sensitive adhesive layer (thickness: 50 µm)).

### [Inventive Example 3]

### < Production of Laminate of Antifouling Layer / Substrate Layer >

100 weight parts (agent A: 50 weight parts, agent B: 50 weight parts) of silicone resin (addition-type liquid silicone resin, trade name "KE-1935", manufactured by Shin-Etsu Chemical Co. Ltd.), 40 weight parts of dimethyl silicone oil (trade name "KF96-100cs", manufactured by Shin-Etsu Chemical Co. Ltd.), 20 weight parts of alkyl-modified silicone oil (trade name "KF415", manufactured by Shin-Etsu Chemical Co. Ltd.), and 10 weight parts of polyether-modified silicone oil (trade name "KF6013 ", manufactured by Shin-Etsu Chemical Co. Ltd.), were mixed together, and the resulting mixture was steered at room temperature (23°C) for 5 minutes to obtain an antifouling layer-forming material liquid. The obtained antifouling layer-forming material liquid was applied onto the surface of an ionomer substrate (trade name "Himilan 1855", manufactured by Dupont-Mitsui Polychemicals Co., Ltd., thickness: 100 µm), using an applicator, and then cured at 140°C for 2 minutes to obtain a 200 µm-thick, antifouling layer-attached substrate layer (antifouling layer (thickness: 100 µm)/substrate layer (thickness: 100 µm)).

### < Production of Antifouling Layer-Including Pressure-Sensitive Adhesive Film >

The pressure-sensitive adhesive layer obtained in Inventive Example 1 was bonded to the substrate layer of the 200 µm-thick, antifouling layer-attached substrate layer (antifouling layer (thickness: 100 µm)/substrate layer (thickness: 100 µm)) obtained in Inventive Example 3, using a laminator to obtain an antifouling layer-including pressure-sensitive adhesive film consisting of "antifouling layer (thickness: 100 µm)/substrate layer (thickness: 100 µm)/ pressure-sensitive adhesive layer (thickness: 50 µm)).

### [Inventive Example 4]

### < Production of Laminate of Antifouling Layer / Substrate Layer >

100 weight parts (agent A: 50 weight parts, agent B: 50 weight parts) of silicone resin (addition-type liquid silicone resin, trade name "KE-1935", manufactured by Shin-Etsu Chemical Co. Ltd.), 40 weight parts of dimethyl silicone oil (trade name "KF96-100cs", manufactured by Shin-Etsu Chemical Co. Ltd.), 20 weight parts of alkyl-modified silicone oil (trade name "KF415", manufactured by Shin-Etsu Chemical Co. Ltd.), and 10 weight parts of polyether-modified silicone oil (trade name "KF6017", manufactured by Shin-Etsu Chemical Co. Ltd.), were mixed together, and the resulting mixture was steered at room temperature (23°C) for 5 minutes to obtain an antifouling layer-forming material liquid. The obtained antifouling layer-forming material liquid was applied onto the surface of an ionomer substrate (trade name "Himilan 1855", manufactured by Dupont-Mitsui Polychemicals Co., Ltd., thickness: 100 µm), using an applicator, and then cured at 140°C for 2 minutes to obtain a 200 µm-thick, antifouling layer-attached substrate layer (antifouling layer (thickness: 100 µm)/substrate layer (thickness: 100 µm)).

### < Production of Antifouling Layer-Including Pressure-Sensitive Adhesive Film >

The pressure-sensitive adhesive layer obtained in Inventive Example 1 was bonded to the substrate layer of the 200 µm-thick, antifouling layer-attached substrate layer (antifouling layer (thickness: 100 µm)/substrate layer (thickness: 100 µm)) obtained in Inventive Example 4, using a laminator to obtain an antifouling layer-including pressure-sensitive adhesive film consisting of "antifouling layer (thickness: 100 µm)/substrate layer (thickness: 100 µm)/ pressure-sensitive adhesive layer (thickness: 50 µm)).

### [Inventive Example 5]

### < Production of Laminate of Antifouling Layer / Substrate Layer >

100 weight parts (agent A: 50 weight parts, agent B: 50 weight parts) of silicone resin (addition-type liquid silicone resin, trade name "KE-1935", manufactured by Shin-Etsu Chemical Co. Ltd.), 65 weight parts of dimethyl silicone oil (trade name "KF96-100cs", manufactured by Shin-Etsu Chemical Co. Ltd.), and 5 weight parts of polyether-modified silicone oil (trade name "KF6016", manufactured by Shin-Etsu Chemical Co. Ltd.), were mixed together, and the resulting mixture was steered at room temperature (23°C) for 5 minutes to obtain an antifouling layer-forming material liquid. The obtained antifouling layer-forming material liquid was applied onto the surface of an ionomer substrate (trade name "Himilan 1855", manufactured by Dupont-Mitsui Polychemicals Co., Ltd., thickness: 100 µm), using an applicator, and then cured at 140°C for 2 minutes to obtain a 200 µm-thick, antifouling layer-attached substrate layer (antifouling layer (thickness: 100 µm)/substrate layer (thickness: 100 µm)).

### < Production of Antifouling Layer-Including Pressure-Sensitive Adhesive Film >

The pressure-sensitive adhesive layer obtained in Inventive Example 1 was bonded to the substrate layer of the 200 µm-thick, antifouling layer-attached substrate layer (antifouling layer (thickness: 100 µm)/substrate layer (thickness: 100 µm)) obtained in Inventive Example 5, using a laminator to obtain an antifouling layer-including pressure-sensitive adhesive film consisting of "antifouling layer (thickness: 100 µm)/substrate layer (thickness: 100 µm)/ pressure-sensitive adhesive layer (thickness: 50 µm)).

### [Inventive Example 6]

### < Production of Laminate of Antifouling Layer / Substrate Layer >

100 weight parts (agent A: 50 weight parts, agent B: 50 weight parts) of silicone resin (addition-type liquid silicone resin, trade name "KE-1935", manufactured by Shin-Etsu Chemical Co. Ltd.), 35 weight parts of dimethyl silicone oil (trade name "KF96-100cs", manufactured by Shin-Etsu Chemical Co. Ltd.), 8 weight parts of alkyl-modified silicone oil (trade name "KF415", manufactured by Shin-Etsu Chemical Co. Ltd.), 4 weight parts of polyether-modified silicone oil (trade name "KF6015", manufactured by Shin-Etsu Chemical Co. Ltd.), and 2 weight parts of polyether-modified silicone oil (trade name "KF6016", manufactured by Shin-Etsu Chemical Co. Ltd.), were mixed together, and the resulting mixture was steered at room temperature (23°C) for 5 minutes to obtain an antifouling layer-forming material liquid. The obtained antifouling layer-forming material liquid was applied onto the surface of an ionomer substrate (trade name "Himilan 1855", manufactured by Dupont-Mitsui Polychemicals Co., Ltd., thickness: 100 µm), using an applicator, and then cured at 140°C for 2 minutes to obtain a 200 µm-thick, antifouling layer-attached substrate layer (antifouling layer (thickness: 100 µm)/substrate layer (thickness: 100 µm)).

### < Production of Antifouling Layer-Including Pressure-Sensitive Adhesive Film >

The pressure-sensitive adhesive layer obtained in Inventive Example 1 was bonded to the substrate layer of the 200 µm-thick, antifouling layer-attached substrate layer (antifouling layer (thickness: 100 µm)/substrate layer (thickness: 100 µm)) obtained in Inventive Example 6, using a laminator to obtain an antifouling layer-including pressure-sensitive adhesive film consisting of "antifouling layer (thickness: 100 µm)/substrate layer (thickness: 100 µm)/ pressure-sensitive adhesive layer (thickness: 50 µm)).

### [Inventive Example 7]

### < Production of Laminate of Antifouling Layer / Substrate Layer >

100 weight parts (agent A: 50 weight parts, agent B: 50 weight parts) of silicone resin (addition-type liquid silicone resin, trade name "KE-1935", manufactured by Shin-Etsu Chemical Co. Ltd.), 35 weight parts of dimethyl silicone oil (trade name "KF96-100cs", manufactured by Shin-Etsu Chemical Co. Ltd.), 20 weight parts of alkyl-modified silicone oil (trade name "KF415", manufactured by Shin-Etsu Chemical Co. Ltd.), 10 weight parts of polyether-modified silicone oil (trade name "KF6015", manufactured by Shin-Etsu Chemical Co. Ltd.), and 5 weight parts of polyether-modified silicone oil (trade name "KF6016", manufactured by Shin-Etsu Chemical Co. Ltd.), were mixed together, and the resulting mixture was steered at room temperature (23°C) for 5 minutes to obtain an antifouling layer-forming material liquid. The obtained antifouling layer-forming material liquid was applied onto the surface of an ionomer substrate (trade name "Himilan 1855", manufactured by Dupont-Mitsui Polychemicals Co., Ltd., thickness: 100 µm), using an applicator, and then cured at 140°C for 2 minutes to obtain a 150 µm-thick, antifouling layer-attached substrate layer (antifouling layer (thickness: 50 µm)/substrate layer (thickness: 100 µm)).

### < Production of Antifouling Layer-Including Pressure-Sensitive Adhesive Film >

The pressure-sensitive adhesive layer obtained in Inventive Example 1 was bonded to the substrate layer of the 150 µm-thick, antifouling layer-attached substrate layer (antifouling layer (thickness: 50 µm)/substrate layer (thickness: 100 µm)) obtained in Inventive Example 7, using a laminator to obtain an antifouling layer-including pressure-sensitive adhesive film consisting of "antifouling layer (thickness: 50 µm)/substrate layer (thickness: 100 µm)/ pressure-sensitive adhesive layer (thickness: 50 µm)).

### [Inventive Example 8]

### < Production of Laminate of Antifouling Layer / Substrate Layer >

100 weight parts (agent A: 50 weight parts, agent B: 50 weight parts) of silicone resin (addition-type liquid silicone resin, trade name "KE-1935", manufactured by Shin-Etsu Chemical Co. Ltd.), 35 weight parts of dimethyl silicone oil (trade name "KF96-100cs", manufactured by Shin-Etsu Chemical Co. Ltd.), 20 weight parts of alkyl-modified silicone oil (trade name "KF415", manufactured by Shin-Etsu Chemical Co. Ltd.), 10 weight parts of polyether-modified silicone oil (trade name "KF6015", manufactured by Shin-Etsu Chemical Co. Ltd.), and 5 weight parts of polyether-modified silicone oil (trade name "KF6016", manufactured by Shin-Etsu Chemical Co. Ltd.), were mixed together, and the resulting mixture was steered at room temperature (23°C) for 5 minutes to obtain an antifouling layer-forming material liquid. The obtained antifouling layer-forming material liquid was applied onto the surface of an ionomer substrate (trade name "Himilan 1855", manufactured by Dupont-Mitsui Polychemicals Co., Ltd., thickness: 100 µm), using an applicator, and then cured at 140°C for 2 minutes to obtain a 300 µm-thick, antifouling layer-attached substrate layer (antifouling layer (thickness: 200 µm)/substrate layer (thickness: 100 µm)).

### < Production of Antifouling Layer-Including Pressure-Sensitive Adhesive Film >

The pressure-sensitive adhesive layer obtained in Inventive Example 1 was bonded to the substrate layer of the 300 µm-thick, antifouling layer-attached substrate layer (antifouling layer (thickness: 200 µm)/substrate layer (thickness: 100 µm)) obtained in Inventive Example 8, using a laminator to obtain an antifouling layer-including pressure-sensitive adhesive film consisting of "antifouling layer (thickness: 200 µm)/substrate layer (thickness: 100 µm)/ pressure-sensitive adhesive layer (thickness: 50 µm)).

### [Inventive Example 9]

### < Production of Laminate of Antifouling Layer / Substrate Layer >

A 200 µm-thick, antifouling layer-attached substrate layer (antifouling layer (thickness: 100 µm)/substrate layer (thickness: 100 µm)) was obtained in the same manner as that in Inventive Example 1.

### < Production of Pressure-Sensitive Adhesive Layer)

10 weight parts of the acrylic polymer obtained in Production Example 1, and 0.32 weight parts of dipentaerythritol hexaacrylate (trade name "A-DPH", manufactured by Shin-Nakamura Chemical Co., Ltd.), were put into the acrylic monomer-polymer mixture obtained in Inventive Example 1. The resulting resin composition was applied to the surface of a separator (trade name "MRF38", manufactured by Mitsubishi Plastics, Inc., thickness: 38 µm) using an applicator. Then, after bonding a cover separator (trade name "MRF38", manufactured by Mitsubishi Plastics, Inc., thickness: 38 µm) to the applied resin composition by a hand roller, the resin composition was irradiated with ultraviolet light from an ultraviolet lamp (ultraviolet illuminance: 3.4 mW/cm², cumulative dose: 2,000 mJ/cm²) to obtain a 20 µm-thick pressure-sensitive adhesive composition.

### < Production of Antifouling Layer-Including Pressure-Sensitive Adhesive Film >

The pressure-sensitive adhesive layer obtained in Inventive Example 9 was bonded to the substrate layer of the 200 µm-thick, antifouling layer-attached substrate layer (antifouling layer (thickness: 100 µm)/substrate layer (thickness: 100 µm)) obtained in Inventive Example 9, using a laminator to obtain an antifouling layer-including pressure-sensitive adhesive film consisting of "antifouling layer (thickness: 100 µm)/substrate layer (thickness: 100 µm)/ pressure-sensitive adhesive layer (thickness: 20 µm)).

### [Inventive Example 10]

### < Production of Laminate of Antifouling Layer / Substrate Layer >

A 200 µm-thick, antifouling layer-attached substrate layer (antifouling layer (thickness: 100 µm)/substrate layer (thickness: 100 µm)) was obtained in the same manner as that in Inventive Example 1.

### < Production of Pressure-Sensitive Adhesive Layer)

10 weight parts of the acrylic polymer obtained in Production Example 1, and 0.32 weight parts of dipentaerythritol hexaacrylate (trade name "A-DPH", manufactured by Shin-Nakamura Chemical Co., Ltd.), were put into the acrylic monomer-polymer mixture obtained in Inventive Example 1. The resulting resin composition was applied to the surface of a separator (trade name "MRF38", manufactured by Mitsubishi Plastics, Inc., thickness: 38 µm) using an applicator. Then, after bonding a cover separator (trade name "MRF38", manufactured by Mitsubishi Plastics, Inc., thickness: 38 µm) to the applied resin composition by a hand roller, the resin composition was irradiated with ultraviolet light from an ultraviolet lamp (ultraviolet illuminance: 3.4 mW/cm², cumulative dose: 2,000 mJ/cm²) to obtain a 300 µm-thick pressure-sensitive adhesive composition.

### < Production of Antifouling Layer-Including Pressure-Sensitive Adhesive Film >

The pressure-sensitive adhesive layer obtained in Inventive Example 10 was bonded to the substrate layer of the 200 µm-thick, antifouling layer-attached substrate layer (antifouling layer (thickness: 100 µm)/substrate layer (thickness: 100 µm)) obtained in Inventive Example 10, using a laminator to obtain an antifouling layer-including pressure-sensitive adhesive film consisting of "antifouling layer (thickness: 100 µm)/substrate layer (thickness: 100 µm)/ pressure-sensitive adhesive layer (thickness: 300 µm)).

### [Inventive Example 11]

### < Production of Laminate of Antifouling Layer / Substrate Layer >

100 weight parts (agent A: 50 weight parts, agent B: 50 weight parts) of silicone resin (addition-type liquid silicone resin, trade name "KE-1935", manufactured by Shin-Etsu Chemical Co. Ltd.), 35 weight parts of dimethyl silicone oil (trade name "KF96-100cs", manufactured by Shin-Etsu Chemical Co. Ltd.), 20 weight parts of alkyl-modified silicone oil (trade name "KF415", manufactured by Shin-Etsu Chemical Co. Ltd.), 10 weight parts of polyether-modified silicone oil (trade name "KF6015", manufactured by Shin-Etsu Chemical Co. Ltd.), and 5 weight parts of polyether-modified silicone oil (trade name "KF6016", manufactured by Shin-Etsu Chemical Co. Ltd.), were mixed together, and the resulting mixture was steered at room temperature (23°C) for 5 minutes to obtain an antifouling layer-forming material liquid. The obtained antifouling layer-forming material liquid was applied onto the surface of an ionomer substrate (trade name "Himilan 1855", manufactured by Dupont-Mitsui Polychemicals Co., Ltd., thickness: 50 µm), using an applicator, and then cured at 140°C for 2 minutes to obtain a 150 µm-thick, antifouling layer-attached substrate layer (antifouling layer (thickness: 100 µm)/substrate layer (thickness: 50 µm)).

### < Production of Antifouling Layer-Including Pressure-Sensitive Adhesive Film >

The pressure-sensitive adhesive layer obtained in Inventive Example 1 was bonded to the substrate layer of the 150 µm-thick, antifouling layer-attached substrate layer (antifouling layer (thickness: 100 µm)/substrate layer (thickness: 50 µm)) obtained in Inventive Example 11, using a laminator to obtain an antifouling layer-including pressure-sensitive adhesive film consisting of "antifouling layer (thickness: 100 µm)/substrate layer (thickness: 50 µm)/ pressure-sensitive adhesive layer (thickness: 50 µm)).

### [Inventive Example 12]

### < Production of Laminate of Antifouling Layer / Substrate Layer >

100 weight parts (agent A: 50 weight parts, agent B: 50 weight parts) of silicone resin (addition-type liquid silicone resin, trade name "KE-1935", manufactured by Shin-Etsu Chemical Co. Ltd.), 35 weight parts of dimethyl silicone oil (trade name "KF96-100cs", manufactured by Shin-Etsu Chemical Co. Ltd.), 20 weight parts of alkyl-modified silicone oil (trade name "KF415", manufactured by Shin-Etsu Chemical Co. Ltd.), 10 weight parts of polyether-modified silicone oil (trade name "KF6015", manufactured by Shin-Etsu Chemical Co. Ltd.), and 5 weight parts of polyether-modified silicone oil (trade name "KF6016", manufactured by Shin-Etsu Chemical Co. Ltd.), were mixed together, and the resulting mixture was steered at room temperature (23°C) for 5 minutes to obtain an antifouling layer-forming material liquid. The obtained antifouling layer-forming material liquid was applied onto the surface of an ionomer substrate (trade name "Himilan 1855", manufactured by Dupont-Mitsui Polychemicals Co., Ltd., thickness: 300 µm), using an applicator, and then cured at 140°C for 2 minutes to obtain a 400 µm-thick, antifouling layer-attached substrate layer (antifouling layer (thickness: 100 µm)/substrate layer (thickness: 300 µm)).

### < Production of Antifouling Layer-Including Pressure-Sensitive Adhesive Film >

The pressure-sensitive adhesive layer obtained in Inventive Example 1 was bonded to the substrate layer of the 400 µm-thick, antifouling layer-attached substrate layer (antifouling layer (thickness: 100 µm)/substrate layer (thickness: 300 µm)) obtained in Inventive Example 12, using a laminator to obtain an antifouling layer-including pressure-sensitive adhesive film consisting of "antifouling layer (thickness: 100 µm)/substrate layer (thickness: 300 µm)/ pressure-sensitive adhesive layer (thickness: 50 µm)).

### [Inventive Example 13]

### < Production of Substrate Layer >

A solution obtained by dissolving 25 weight% of a copolymer of polyvinyl chloride and polyvinyl acetate (trade name "SOLBIN CH", manufactured by Shin-Etsu Chemical Co. Ltd.) in 75 weight parts of methyl ethyl ketone was applied to the surface of a separator (trade name "MRF38" manufactured by Mitsubishi Plastics, Inc., thickness: 38 µm) using an applicator, and then dried at 120°C for 2 minutes to obtain a 30 µm-thick substrate layer. Subsequently, a mixed liquid obtained by mixing 100 weight parts of polyethylene-based ionomer resin emulsion (SA100, manufactured by Mitsui Chemicals, Inc.), 100 weight parts of colloidal silica (ADELITE AT-50, manufactured by ADEKA Corporation), and 0.5 weight parts of surfactant (Surfynol 420, manufactured by Nissin Chemical Co., Ltd.) was applied onto the substrate layer obtained in the above manner, using a wire bar #6, and then dried at 60°C for 1 minute to obtain a primer-treated substrate layer.

### < Production of Laminate of Antifouling Layer / Substrate Layer >

100 weight parts (agent A: 50 weight parts, agent B: 50 weight parts) of silicone resin (addition-type liquid silicone resin, trade name "KE-1935", manufactured by Shin-Etsu Chemical Co. Ltd.), 35 weight parts of dimethyl silicone oil (trade name "KF96-100cs", manufactured by Shin-Etsu Chemical Co. Ltd.), 20 weight parts of alkyl-modified silicone oil (trade name "KF415", manufactured by Shin-Etsu Chemical Co. Ltd.), 10 weight parts of polyether-modified silicone oil (trade name "KF6015", manufactured by Shin-Etsu Chemical Co. Ltd.), and 5 weight parts of polyether-modified silicone oil (trade name "KF6016", manufactured by Shin-Etsu Chemical Co. Ltd.), were mixed together, and the resulting mixture was steered at room temperature (23°C) for 5 minutes to obtain an antifouling layer-forming material liquid. The obtained antifouling layer-forming material liquid was applied onto a primer-treated surface of the primer-treated substrate obtained in Inventive Example 13, using an applicator, and then cured at 140°C for 2 minutes to obtain a 130 µm-thick, antifouling layer-attached substrate layer (antifouling layer (thickness: 100 µm)/substrate layer (thickness: 30 µm)).

### < Production of Antifouling Layer-Including Pressure-Sensitive Adhesive Film >

The pressure-sensitive adhesive layer obtained in Inventive Example 1 was bonded to the substrate layer of the 130 µm-thick, antifouling layer-attached substrate layer (antifouling layer (thickness: 100 µm)/substrate layer (thickness: 30 µm)) obtained in Inventive Example 13, using a laminator to obtain an antifouling layer-including pressure-sensitive adhesive film consisting of "antifouling layer (thickness: 100 µm)/substrate layer (thickness: 30 µm)/ pressure-sensitive adhesive layer (thickness: 50 µm)).

### [Inventive Example 14]

### < Production of Substrate Layer >

100 weight parts of vinyl chloride resin (trade name "TH-1000", manufactured by Taiyo Vinyl Corporation), and 40 weight parts of di-isononyl phthalate (J-PLUS Co., Ltd.) were kneaded by a Banbury mixer, and rolled by a calendar roll to obtain a 100 µm-thick polyvinyl chloride substrate. Subsequently, a mixed liquid obtained by mixing 100 weight parts of polyethylene-based ionomer resin emulsion (SA100, manufactured by Mitsui Chemicals, Inc.), 100 weight parts of colloidal silica (ADELITE AT-50, manufactured by ADEKA Corporation), and 0.5 weight parts of surfactant (Surfynol 420, manufactured by Nissin Chemical Co., Ltd.) was applied onto the polyvinyl chloride substrate obtained in the above manner, using a wire bar #6, and then dried at 60°C for 1 minute to obtain a primer-treated substrate layer.

### < Production of Laminate of Antifouling Layer / Substrate Layer >

100 weight parts (agent A: 50 weight parts, agent B: 50 weight parts) of silicone resin (addition-type liquid silicone resin, trade name "KE-1935", manufactured by Shin-Etsu Chemical Co. Ltd.), 35 weight parts of dimethyl silicone oil (trade name "KF96-100cs", manufactured by Shin-Etsu Chemical Co. Ltd.), 20 weight parts of alkyl-modified silicone oil (trade name "KF415", manufactured by Shin-Etsu Chemical Co. Ltd.), 10 weight parts of polyether-modified silicone oil (trade name "KF6015", manufactured by Shin-Etsu Chemical Co. Ltd.), and 5 weight parts of polyether-modified silicone oil (trade name "KF6016", manufactured by Shin-Etsu Chemical Co. Ltd.), were mixed together, and the resulting mixture was steered at room temperature (23°C) for 5 minutes to obtain an antifouling layer-forming material liquid. The obtained antifouling layer-forming material liquid was applied onto a primer-treated surface of the primer-treated substrate obtained in Inventive Example 14, using an applicator, and then cured at 140°C for 2 minutes to obtain a 200 µm-thick, antifouling layer-attached substrate layer (antifouling layer (thickness: 100 µm)/substrate layer (thickness: 100 µm)).

### < Production of Antifouling Layer-Including Pressure-Sensitive Adhesive Film >

The pressure-sensitive adhesive layer obtained in Inventive Example 1 was bonded to the substrate layer of the 200 µm-thick, antifouling layer-attached substrate layer (antifouling layer (thickness: 100 µm)/substrate layer (thickness: 100 µm)) obtained in Inventive Example 14, using a laminator to obtain an antifouling layer-including pressure-sensitive adhesive film consisting of "antifouling layer (thickness: 100 µm)/substrate layer (thickness: 100 µm)/ pressure-sensitive adhesive layer (thickness: 50 µm)).

### [Inventive Example 15]

### < Production of Substrate Layer >

A mixed liquid obtained by mixing 100 weight parts of polyethylene-based ionomer resin emulsion (SA100, manufactured by Mitsui Chemicals, Inc.), 100 weight parts of colloidal silica (ADELITE AT-50, manufactured by ADEKA Corporation), and 0.5 weight parts of surfactant (Surfynol 420, manufactured by Nissin Chemical Co., Ltd.) was applied onto a polyethylene terephthalate substrate (trade name "Lumirror 38 S10", manufactured by PANAC Corporation, thickness: 38 µm), using a wire bar #6, and then dried at 60°C for 1 minute to obtain a primer-treated substrate layer.

### < Production of Laminate of Antifouling Layer / Substrate Layer >

100 weight parts (agent A: 50 weight parts, agent B: 50 weight parts) of silicone resin (addition-type liquid silicone resin, trade name "KE-1935", manufactured by Shin-Etsu Chemical Co. Ltd.), 35 weight parts of dimethyl silicone oil (trade name "KF96-100cs", manufactured by Shin-Etsu Chemical Co. Ltd.), 20 weight parts of alkyl-modified silicone oil (trade name "KF415", manufactured by Shin-Etsu Chemical Co. Ltd.), 10 weight parts of polyether-modified silicone oil (trade name "KF6015", manufactured by Shin-Etsu Chemical Co. Ltd.), and 5 weight parts of polyether-modified silicone oil (trade name "KF6016", manufactured by Shin-Etsu Chemical Co. Ltd.), were mixed together, and the resulting mixture was steered at room temperature (23°C) for 5 minutes to obtain an antifouling layer-forming material liquid. The obtained antifouling layer-forming material liquid was applied onto a primer-treated surface of the primer-treated substrate obtained in Inventive Example 15, using an applicator, and then cured at 140°C for 2 minutes to obtain a 138 µm-thick, antifouling layer-attached substrate layer (antifouling layer (thickness: 100 µm)/substrate layer (thickness: 38 µm)).

### < Production of Antifouling Layer-Including Pressure-Sensitive Adhesive Film >

The pressure-sensitive adhesive layer obtained in Inventive Example 1 was bonded to the substrate layer of the 138 µm-thick, antifouling layer-attached substrate layer (antifouling layer (thickness: 100 µm)/substrate layer (thickness: 38 µm)) obtained in Inventive Example 15, using a laminator to obtain an antifouling layer-including pressure-sensitive adhesive film consisting of "antifouling layer (thickness: 100 µm)/substrate layer (thickness: 38 µm)/ pressure-sensitive adhesive layer (thickness: 50 µm)).

### [Inventive Example 16]

### < Production of Substrate Layer >

A mixed liquid obtained by mixing 100 weight parts of polyethylene-based ionomer resin emulsion (SA100, manufactured by Mitsui Chemicals, Inc.), 100 weight parts of colloidal silica (ADELITE AT-50, manufactured by ADEKA Corporation), and 0.5 weight parts of surfactant (Surfynol 420, manufactured by Nissin Chemical Co., Ltd.) was applied onto a polycarbonate-based polyurethane resin substrate (trade name "Esuma URS PXII", manufactured by Nihon Matai Co., Ltd., thickness of 100 µm), using a wire bar #6, and then dried at 60°C for 1 minute to obtain a primer-treated substrate layer.

### < Production of Laminate of Antifouling Layer / Substrate Layer >

100 weight parts (agent A: 50 weight parts, agent B: 50 weight parts) of silicone resin (addition-type liquid silicone resin, trade name "KE-1935", manufactured by Shin-Etsu Chemical Co. Ltd.), 35 weight parts of dimethyl silicone oil (trade name "KF96-100cs", manufactured by Shin-Etsu Chemical Co. Ltd.), 20 weight parts of alkyl-modified silicone oil (trade name "KF415", manufactured by Shin-Etsu Chemical Co. Ltd.), 10 weight parts of polyether-modified silicone oil (trade name "KF6015", manufactured by Shin-Etsu Chemical Co. Ltd.), and 5 weight parts of polyether-modified silicone oil (trade name "KF6016", manufactured by Shin-Etsu Chemical Co. Ltd.), were mixed together, and the resulting mixture was steered at room temperature (23°C) for 5 minutes to obtain an antifouling layer-forming material liquid. The obtained antifouling layer-forming material liquid was applied onto a primer-treated surface of the primer-treated substrate obtained in Inventive Example 16, using an applicator, and then cured at 140°C for 2 minutes to obtain a 200 µm-thick, antifouling layer-attached substrate layer (antifouling layer (thickness: 100 µm)/substrate layer (thickness: 100 µm)).

### < Production of Antifouling Layer-Including Pressure-Sensitive Adhesive Film >

The pressure-sensitive adhesive layer obtained in Inventive Example 1 was bonded to the substrate layer of the 300 µm-thick, antifouling layer-attached substrate layer (antifouling layer (thickness: 100 µm)/substrate layer (thickness: 100 µm)) obtained in Inventive Example 16, using a laminator to obtain an antifouling layer-including pressure-sensitive adhesive film consisting of "antifouling layer (thickness: 100 µm)/substrate layer (thickness: 100 µm)/ pressure-sensitive adhesive layer (thickness: 50 µm)).

### [Inventive Example 17]

### < Production of Laminate of Antifouling Layer / Substrate Layer >

A 200 µm-thick, antifouling layer-attached substrate layer (antifouling layer (thickness: 100 µm)/substrate layer (thickness: 100 µm)) was obtained in the same manner as that in Inventive Example 16.

### < Production of Pressure-Sensitive Adhesive Layer)

94 weight parts of 2-ethylhexyl acrylate (manufactured by Toagosei Co., Ltd.), and 6 weight parts of acrylic acid (manufactured by Toagosei Co., Ltd.) were put into a reaction vessel equipped with a cooling tube, a nitrogen inlet tube, a thermometer and a stirring device. Then, 0.05 weight parts of 2,2-dimethoxy-1,2-diphenylethan-1-one (trade name "Irgacure 651", manufactured by BASF) as a photopolymerization initiator was put thereinto and dispersed therein, and, under a nitrogen stream, the resulting dispersion mixture was subjected to UV irradiation from thereabove, while being stirred, to convert a part of monomers into a polymer, thereby adjusting the viscosity thereof to a coatable level to obtain an acrylic monomer-polymer mixture. 5 weight parts of the acrylic polymer obtained in Production Example 1, and 0.16 weight parts of 1,6-hexanediol diacrylate (trade name "A-HD-N", manufactured by Shin-Nakamura Chemical Co., Ltd.), were put into the obtained acrylic monomer-polymer mixture. The resulting resin composition was applied to the surface of a separator (trade name "MRF38" manufactured by Mitsubishi Plastics, Inc., thickness: 38 µm) using an applicator. Then, after bonding a cover separator (trade name "MRF38" manufactured by Mitsubishi Plastics, Inc., thickness: 38 µm) to the applied resin composition by a hand roller, the resin composition was irradiated with ultraviolet light from an ultraviolet lamp (ultraviolet illuminance: 3.4 mW/cm², cumulative dose: 2,000 mJ/cm²) to obtain a 50 µm-thick pressure-sensitive adhesive composition.

### < Production of Antifouling Layer-Including Pressure-Sensitive Adhesive Film >

The pressure-sensitive adhesive layer obtained in Inventive Example 17 was bonded to the substrate layer of the 200 µm-thick, antifouling layer-attached substrate layer (antifouling layer (thickness: 100 µm)/substrate layer (thickness: 100 µm)) obtained in Inventive Example 17, using a laminator to obtain an antifouling layer-including pressure-sensitive adhesive film consisting of "antifouling layer (thickness: 100 µm)/substrate layer (thickness: 100 µm)/ pressure-sensitive adhesive layer (thickness: 50 µm)).

### [Inventive Example 18]

### < Production of Laminate of Antifouling Layer / Substrate Layer >

100 weight parts of silicone resin (condensed-type liquid silicone resin, trade name "KE-445", manufactured by Shin-Etsu Chemical Co. Ltd.), 65 weight parts of dimethyl silicone oil (trade name "KF96-100cs", manufactured by Shin-Etsu Chemical Co. Ltd.), and 5 weight parts of polyether-modified silicone oil (trade name "KF6016", manufactured by Shin-Etsu Chemical Co. Ltd.), were mixed together, and the resulting mixture was steered at room temperature (23°C) for 5 minutes to obtain an antifouling layer-forming material liquid. The obtained antifouling layer-forming material liquid was applied onto the surface of an ionomer substrate (trade name "Himilan 1855", manufactured by Dupont-Mitsui Polychemicals Co., Ltd., thickness: 100 µm), using an applicator, and then cured at room temperature (23°C) for 24 hours to obtain a 200 µm-thick, antifouling layer-attached substrate layer (antifouling layer (thickness: 100 µm)/substrate layer (thickness: 100 µm)).

### < Production of Antifouling Layer-Including Pressure-Sensitive Adhesive Film >

The pressure-sensitive adhesive layer obtained in Inventive Example 1 was bonded to the substrate layer of the 200 µm-thick, antifouling layer-attached substrate layer (antifouling layer (thickness: 100 µm)/substrate layer (thickness: 100 µm)) obtained in Inventive Example 18, using a laminator to obtain an antifouling layer-including pressure-sensitive adhesive film consisting of "antifouling layer (thickness: 100 µm)/substrate layer (thickness: 100 µm)/ pressure-sensitive adhesive layer (thickness: 50 µm)).

### [Comparative Example 1]

### < Production of Laminate of Antifouling Layer / Substrate Layer >

100 weight parts (agent A: 50 weight parts, agent B: 50 weight parts) of silicone resin (addition-type liquid silicone resin, trade name "KE-1935", manufactured by Shin-Etsu Chemical Co. Ltd.), and 70 weight parts of dimethyl silicone oil (trade name "KF96-100cs", manufactured by Shin-Etsu Chemical Co. Ltd.), were mixed together, and the resulting mixture was steered at room temperature (23°C) for 5 minutes to obtain an antifouling layer-forming material liquid. The obtained antifouling layer-forming material liquid was applied onto the surface of an ionomer substrate (trade name "Himilan 1855", manufactured by Dupont-Mitsui Polychemicals Co., Ltd., thickness: 100 µm), using an applicator, and then cured at 140°C for 2 minutes to obtain a 200 µm-thick, antifouling layer-attached substrate layer (antifouling layer (thickness: 100 µm)/substrate layer (thickness: 100 µm)).

### < Production of Antifouling Layer-Including Pressure-Sensitive Adhesive Film >

The pressure-sensitive adhesive layer obtained in Inventive Example 1 was bonded to the substrate layer of the 200 µm-thick, antifouling layer-attached substrate layer (antifouling layer (thickness: 100 µm)/substrate layer (thickness: 100 µm)) obtained in Comparative Example 1, using a laminator to obtain an antifouling layer-including pressure-sensitive adhesive film consisting of "antifouling layer (thickness: 100 µm)/substrate layer (thickness: 100 µm)/ pressure-sensitive adhesive layer (thickness: 50 µm)).

### [Comparative Example 2]

### < Production of Laminate of Antifouling Layer / Substrate Layer >

100 weight parts (agent A: 50 weight parts, agent B: 50 weight parts) of silicone resin (addition-type liquid silicone resin, trade name "KE-1935", manufactured by Shin-Etsu Chemical Co. Ltd.), 26 weight parts of dimethyl silicone oil (trade name "KF96-100cs", manufactured by Shin-Etsu Chemical Co. Ltd.), 20 weight parts of alkyl-modified silicone oil (trade name "KF415", manufactured by Shin-Etsu Chemical Co. Ltd.), and 1 weight part of polyether-modified silicone oil (trade name "KF6016", manufactured by Shin-Etsu Chemical Co. Ltd.), were mixed together, and the resulting mixture was steered at room temperature (23°C) for 5 minutes to obtain an antifouling layer-forming material liquid. The obtained antifouling layer-forming material liquid was applied onto the surface of an ionomer substrate (trade name "Himilan 1855", manufactured by Dupont-Mitsui Polychemicals Co., Ltd., thickness: 100 µm), using an applicator, and then cured at 140°C for 2 minutes to obtain a 200 µm-thick, antifouling layer-attached substrate layer (antifouling layer (thickness: 100 µm)/substrate layer (thickness: 100 µm)).

### < Production of Antifouling Layer-Including Pressure-Sensitive Adhesive Film >

The pressure-sensitive adhesive layer obtained in Inventive Example 1 was bonded to the substrate layer of the 200 µm-thick, antifouling layer-attached substrate layer (antifouling layer (thickness: 100 µm)/substrate layer (thickness: 100 µm)) obtained in Comparative Example 2, using a laminator to obtain an antifouling layer-including pressure-sensitive adhesive film consisting of "antifouling layer (thickness: 100 µm)/substrate layer (thickness: 100 µm)/ pressure-sensitive adhesive layer (thickness: 50 µm)).

### [Comparative Example 3]

### < Production of Laminate of Antifouling Layer / Substrate Layer >

100 weight parts (agent A: 50 weight parts, agent B: 50 weight parts) of silicone resin (addition-type liquid silicone resin, trade name "KE-1935", manufactured by Shin-Etsu Chemical Co. Ltd.), 35 weight parts of dimethyl silicone oil (trade name "KF96-100cs", manufactured by Shin-Etsu Chemical Co. Ltd.), 20 weight parts of alkyl-modified silicone oil (trade name "KF415", manufactured by Shin-Etsu Chemical Co. Ltd.), 10 weight parts of polyether-modified silicone oil (trade name "KF6015", manufactured by Shin-Etsu Chemical Co. Ltd.), and 5 weight parts of polyether-modified silicone oil (trade name "KF6016", manufactured by Shin-Etsu Chemical Co. Ltd.), were mixed together, and the resulting mixture was steered at room temperature (23°C) for 5 minutes to obtain an antifouling layer-forming material liquid. The obtained antifouling layer-forming material liquid was applied onto the surface of a polycarbonate-based polyurethane resin substrate (trade name "Esuma URS PXII", manufactured by Nihon Matai Co., Ltd., thickness of 100 µm), using an applicator, and then cured at 140°C for 2 minutes to obtain a 200 µm-thick, antifouling layer-attached substrate layer (antifouling layer (thickness: 100 µm)/substrate layer (thickness: 100 µm)).

### < Production of Antifouling Layer-Including Pressure-Sensitive Adhesive Film >

The pressure-sensitive adhesive layer obtained in Inventive Example 1 was bonded to the substrate layer of the 200 µm-thick, antifouling layer-attached substrate layer (antifouling layer (thickness: 100 µm)/substrate layer (thickness: 100 µm)) obtained in Comparative Example 3, using a laminator to obtain an antifouling layer-including pressure-sensitive adhesive film consisting of "antifouling layer (thickness: 100 µm)/substrate layer (thickness: 100 µm)/ pressure-sensitive adhesive layer (thickness: 50 µm)).

### [Comparative Example 4]

### < Production of Substrate Layer >

A solution obtained by dissolving 25 weight% of a copolymer of polyvinyl chloride and polyvinyl acetate (trade name "SOLBIN CH", manufactured by Shin-Etsu Chemical Co. Ltd.) in 75 weight parts of methyl ethyl ketone was applied to the surface of a separator (trade name "MRF38" manufactured by Mitsubishi Plastics, Inc., thickness: 38 µm) using an applicator, and then dried at 120°C for 2 minutes to obtain a 18 µm-thick substrate layer. Subsequently, a mixed liquid obtained by mixing 100 weight parts of polyethylene-based ionomer resin emulsion (SA100, manufactured by Mitsui Chemicals, Inc.), 100 weight parts of colloidal silica (ADELITE AT-50, manufactured by ADEKA Corporation), and 0.5 weight parts of surfactant (Surfynol 420, manufactured by Nissin Chemical Co., Ltd.) was applied onto the substrate layer obtained in the above manner, using a wire bar #6, and then dried at 60°C for 1 minute to obtain a primer-treated substrate layer.

### < Production of Laminate of Antifouling Layer / Substrate Layer >

100 weight parts (agent A: 50 weight parts, agent B: 50 weight parts) of silicone resin (addition-type liquid silicone resin, trade name "KE-1935", manufactured by Shin-Etsu Chemical Co. Ltd.), 35 weight parts of dimethyl silicone oil (trade name "KF96-100cs", manufactured by Shin-Etsu Chemical Co. Ltd.), 20 weight parts of alkyl-modified silicone oil (trade name "KF415", manufactured by Shin-Etsu Chemical Co. Ltd.), 10 weight parts of polyether-modified silicone oil (trade name "KF6015", manufactured by Shin-Etsu Chemical Co. Ltd.), and 5 weight parts of polyether-modified silicone oil (trade name "KF6016", manufactured by Shin-Etsu Chemical Co. Ltd.), were mixed together, and the resulting mixture was steered at room temperature (23°C) for 5 minutes to obtain an antifouling layer-forming material liquid. The obtained antifouling layer-forming material liquid was applied onto a primer-treated surface of the primer-treated substrate obtained in Cpmparative Example 4, using an applicator, and then cured at 140°C for 2 minutes to obtain a 118 µm-thick, antifouling layer-attached substrate layer (antifouling layer (thickness: 100 µm)/substrate layer (thickness: 18 µm)).

### < Production of Antifouling Layer-Including Pressure-Sensitive Adhesive Film >

The pressure-sensitive adhesive layer obtained in Inventive Example 1 was bonded to the substrate layer of the 118 µm-thick, antifouling layer-attached substrate layer (antifouling layer (thickness: 100 µm)/substrate layer (thickness: 18 µm)) obtained in Comparative Example 4, using a laminator to obtain an antifouling layer-including pressure-sensitive adhesive film consisting of "antifouling layer (thickness: 100 µm)/substrate layer (thickness: 18 µm)/ pressure-sensitive adhesive layer (thickness: 50 µm)).

### [Comparative Example 5]

### < Production of Substrate Layer >

71 weight parts of isobornyl acrylate (trade name "IBXA", manufactured by Osaka Organic Chemical Industry Ltd.), 19 weight parts of n-butyl acrylate (manufactured by Toagosei Co., Ltd.), 10 weight parts of acrylic acid (manufactured by Toagosei Co., Ltd.), 68.4 weight parts of poly (oxy-tetramethylene) glycol) (trade name "PTMG 650", manufactured by Mitsubishi Chemical Corporation), and 0.01 weight parts of dibutyltin dilaurate as catalyst, were put into a reaction vessel equipped with a cooling tube, a nitrogen inlet tube, a thermometer and a stirring device. Then, 25.5 weight parts of hydrogenated xylylene diisocyanate (trade name "TAKENATE 600", manufactured by Mitsui Chemicals, Inc.) was dripped in the mixture under stirring to induce a reaction therein at 65°C for 5 hours, thereby obtaining a polyurethane polymer-acrylic monomer mixture. Subsequently, 6.1 weight parts of hydroxyethyl acrylate (trade name "ACRYCS HEA", manufactured by Toagosei Co., Ltd.) was further put in the resulting mixture to induce a reaction therein at 65°C for 1 hours, thereby obtaining an acryloyl group-terminated polyurethane polymer-acrylic monomer mixture. Subsequently, 1 weight part of 3-acryloyloxypropyl trimethoxysilane (trade name "KBM-5103", manufactured by Shin-Etsu Chemical Co., Ltd.), 0.25 weight part of diphenyl(2,4,6-trimethoxybenzoyl)phosphine oxide (trade name "Lucirin TPO", manufactured by BASF) as a photopolymerization initiator, 1.25 weight parts of a UV absorbing agent (trade name "TINUVIN 123", manufactured by BASF), and 0.6 weight part of an anti-oxidizing agent (trade name "TINUVIN 400", manufactured by BASF) were added to the acryloyl group-terminated polyurethane polymer-acrylic monomer mixture to obtain a syrup. Subsequently, the syrup was applied onto the surface of a separator (trade name "MRF38," manufactured by Mitsubishi Plastics, Inc., thickness: 38 µm), using an applicator, to form a 150 µm-thick base material syrup layer. After bonding a cover separator (trade name "MRF38", manufactured by Mitsubishi Plastics, Inc., thickness: 38 µm) to the base material syrup layer by a hand roller, the base material syrup layer was irradiated with UV light from a UV lamp (UV irradiance: 3.4 mW/cm², cumulative dose: 2,000 mJ/cm²) to obtain a 150 µm-thick substrate layer.

### < Production of Laminate of Antifouling Layer / Substrate Layer >

100 weight parts of silicone resin (condensed-type liquid silicone resin, trade name "KE-445", manufactured by Shin-Etsu Chemical Co. Ltd.), and 10 weight parts of phenyl-modified silicone oil (trade name "KF50-100cs", manufactured by Shin-Etsu Chemical Co. Ltd.), were mixed together, and the resulting mixture was steered at room temperature (23°C) for 5 minutes to obtain an antifouling layer-forming material liquid. The obtained antifouling layer-forming material liquid was applied onto the surface of the substrate obtained in Comparative Example 5, using an applicator, and then cured at 150°C for 10 minutes to obtain a 300 µm-thick, antifouling layer-attached substrate layer (antifouling layer (thickness: 150 µm)/substrate layer (thickness: 150 µm)).

### < Production of Pressure-Sensitive Adhesive Layer)

80 weight parts of 2-ethylhexyl acrylate (manufactured by Toagosei Co., Ltd.), and 20 weight parts of N-vinyl-2-pyrrolidone (manufactured by Nippon Shokubai Co., Ltd.) were put into a reaction vessel equipped with a cooling tube, a nitrogen inlet tube, a thermometer and a stirring device. Then, 0.05 weight parts of 2,2-dimethoxy-1,2-diphenylethan-1-one (trade name "Irgacure 651", manufactured by BASF) as a photopolymerization initiator was put thereinto and dispersed therein, and, under a nitrogen stream, the resulting dispersion mixture was subjected to UV irradiation from thereabove, while being stirred, to convert a part of monomers into a polymer, thereby adjusting the viscosity thereof to a coatable level to obtain an acrylic monomer-polymer mixture. 10 weight parts of the acrylic polymer obtained in Production Example 1, and 0.08 weight parts of 1,6-hexanediol diacrylate (trade name "A-HD-N", manufactured by Shin-Nakamura Chemical Co., Ltd.), were put into the obtained acrylic monomer-polymer mixture. The resulting resin composition was applied to the surface of a separator (trade name "MRF38", manufactured by Mitsubishi Plastics, Inc., thickness: 38 µm) using an applicator. Then, after bonding a cover separator (trade name "MRF38", manufactured by Mitsubishi Plastics, Inc., thickness: 38 µm) to the applied resin composition by a hand roller, the resin composition was irradiated with ultraviolet light from an ultraviolet lamp (ultraviolet illuminance: 3.4 mW/cm², cumulative dose: 2,000 mJ/cm²) to obtain a 50 µm-thick pressure-sensitive adhesive composition.

### < Production of Antifouling Layer-Including Pressure-Sensitive Adhesive Film >

The pressure-sensitive adhesive layer obtained in Comparative Example 5 was bonded to the substrate layer of the 300 µm-thick, antifouling layer-attached substrate layer (antifouling layer (thickness: 150 µm)/substrate layer (thickness: 150 µm)) obtained in Comparative Example 5, using a laminator to obtain an antifouling layer-including pressure-sensitive adhesive film consisting of "antifouling layer (thickness: 150 µm)/substrate layer (thickness: 150 µm)/ pressure-sensitive adhesive layer (thickness: 50 µm)).

### [Comparative Example 6]

### < Production of Laminate of Antifouling Layer / Substrate Layer >

100 weight parts (agent A: 50 weight parts, agent B: 50 weight parts) of silicone resin (addition-type liquid silicone resin, trade name "KE-1950", manufactured by Shin-Etsu Chemical Co. Ltd.), 60 weight parts of dimethyl silicone oil (trade name "KF96-100cs", manufactured by Shin-Etsu Chemical Co. Ltd.), 30 weight parts of polyether-modified silicone oil (trade name "KF6017", manufactured by Shin-Etsu Chemical Co. Ltd.), 2 weight parts of a UV absorbing agent (trade name "TINUVIN 571", manufactured by BASF), 1 weight part of nano-silica (trade name "AEROSIL RX-300", manufactured by Nippon Aerosil Co., Ltd.), and 5 weight parts of liquid paraffin (manufactured by KISHIDA CHEMICAL Co., Ltd.), were mixed together, and the resulting mixture was steered at room temperature (23°C) for 5 minutes to obtain an antifouling layer-forming material liquid. The obtained antifouling layer-forming material liquid was applied onto the surface of a polycarbonate-based polyurethane resin substrate (trade name " Higress DUS451", manufactured by Sheedom Co., Ltd., thickness: 100 µm), using an applicator, and then cured at 140°C for 2 minutes to obtain a 200 µm-thick, antifouling layer-attached substrate layer (antifouling layer (thickness: 100 µm)/substrate layer (thickness: 100 µm)).

### < Production of Antifouling Layer-Including Pressure-Sensitive Adhesive Film >

The pressure-sensitive adhesive layer obtained in Inventive Example 17 was bonded to the substrate layer of the 200 µm-thick, antifouling layer-attached substrate layer (antifouling layer (thickness: 100 µm)/substrate layer (thickness: 100 µm)) obtained in Comparative Example 6, using a laminator to obtain an antifouling layer-including pressure-sensitive adhesive film consisting of "antifouling layer (thickness: 100 µm)/substrate layer (thickness: 100 µm)/ pressure-sensitive adhesive layer (thickness: 50 µm)).

### [Comparative Example 7]

### < Production of Laminate of Antifouling Layer / Substrate Layer >

100 weight parts (agent A: 50 weight parts, agent B: 50 weight parts) of silicone resin (addition-type liquid silicone resin, trade name "KE-1950", manufactured by Shin-Etsu Chemical Co. Ltd.), 75 weight parts of dimethyl silicone oil (trade name "KF96-100cs", manufactured by Shin-Etsu Chemical Co. Ltd.), 5 weight parts of polyether-modified silicone oil (trade name "KF6017", manufactured by Shin-Etsu Chemical Co. Ltd.), 2 weight parts of a UV absorbing agent (trade name "TINUVIN 571", manufactured by BASF), 0.25 weight part of a curing catalyst (trade name "CATPL-50T", manufactured by Shin-Etsu Chemical Co. Ltd.), and 5 weight parts of liquid paraffin (manufactured by KISHIDA CHEMICAL Co., Ltd.), were mixed together, and the resulting mixture was steered at room temperature (23°C) for 5 minutes to obtain an antifouling layer-forming material liquid. The obtained antifouling layer-forming material liquid was applied onto the surface of a polycarbonate-based polyurethane resin substrate (trade name " Higress DUS451", manufactured by Sheedom Co., Ltd., thickness: 100 µm), using an applicator, and then cured at 140°C for 2 minutes to obtain a 200 µm-thick, antifouling layer-attached substrate layer (antifouling layer (thickness: 100 µm)/substrate layer (thickness: 100 µm)).

### < Production of Pressure-Sensitive Adhesive Layer)

90 weight parts of 2-ethylhexyl acrylate (manufactured by Toagosei Co., Ltd.), and 10 weight parts of acrylic acid (manufactured by Toagosei Co., Ltd.) were put into a reaction vessel equipped with a cooling tube, a nitrogen inlet tube, a thermometer and a stirring device. Then, 0.05 weight parts of 2,2-dimethoxy-1,2-diphenylethan-1-one (trade name "Irgacure 651", manufactured by BASF) as a photopolymerization initiator was put thereinto and dispersed therein, and, under a nitrogen stream, the resulting dispersion mixture was subjected to UV irradiation from thereabove, while being stirred, to convert a part of monomers into a polymer, thereby adjusting the viscosity thereof to a coatable level to obtain an acrylic monomer-polymer mixture. 0.08 weight parts of 1,6-hexanediol diacrylate (trade name "A-HD-N", manufactured by Shin-Nakamura Chemical Co., Ltd.), was put into the obtained acrylic monomer-polymer mixture. The resulting resin composition was applied to the surface of a separator (trade name "MRF38" manufactured by Mitsubishi Plastics, Inc., thickness: 38 µm) using an applicator. Then, after bonding a cover separator (trade name "MRF38" manufactured by Mitsubishi Plastics, Inc., thickness: 38 µm) to the applied resin composition by a hand roller, the resin composition was irradiated with ultraviolet light from an ultraviolet lamp (ultraviolet illuminance: 3.4 mW/cm², cumulative dose: 2,000 mJ/cm²) to obtain a 50 µm-thick pressure-sensitive adhesive composition.

### < Production of Antifouling Layer-Including Pressure-Sensitive Adhesive Film >

The pressure-sensitive adhesive layer obtained in Comparative Example 7 was bonded to the substrate layer of the 200 µm-thick, antifouling layer-attached substrate layer (antifouling layer (thickness: 100 µm)/substrate layer (thickness: 100 µm)) obtained in Comparative Example 7, using a laminator to obtain an antifouling layer-including pressure-sensitive adhesive film consisting of "antifouling layer (thickness: 100 µm)/substrate layer (thickness: 100 µm)/ pressure-sensitive adhesive layer (thickness: 50 µm)).

### [Comparative Example 8]

### < Production of Laminate of Antifouling Layer / Substrate Layer >

100 weight parts (agent A: 50 weight parts, agent B: 50 weight parts) of silicone resin (addition-type liquid silicone resin, trade name "KE-1935", manufactured by Shin-Etsu Chemical Co. Ltd.), 70 weight parts of dimethyl silicone oil (trade name "KF96-100cs", manufactured by Shin-Etsu Chemical Co. Ltd.), and 20 weight parts of polyether-modified silicone oil (trade name "KF6017", manufactured by Shin-Etsu Chemical Co. Ltd.), were mixed together, and the resulting mixture was steered at room temperature (23°C) for 5 minutes to obtain an antifouling layer-forming material liquid. The obtained antifouling layer-forming material liquid was applied onto the surface of an ionomer substrate (trade name "Himilan 1855", manufactured by Dupont-Mitsui Polychemicals Co., Ltd., thickness: 100 µm), using an applicator, and then cured at 140°C for 2 minutes to obtain a 200 µm-thick, antifouling layer-attached substrate layer (antifouling layer (thickness: 100 µm)/substrate layer (thickness: 100 µm)).

90 weight parts of 2-ethylhexyl acrylate (manufactured by Toagosei Co., Ltd.), and 10 weight parts of acrylic acid (manufactured by Toagosei Co., Ltd.) were put into a reaction vessel equipped with a cooling tube, a nitrogen inlet tube, a thermometer and a stirring device. Then, 0.05 weight parts of 2,2-dimethoxy-1,2-diphenylethan-1-one (trade name "Irgacure 651", manufactured by BASF) as a photopolymerization initiator was put thereinto and dispersed therein, and, under a nitrogen stream, the resulting dispersion mixture was subjected to UV irradiation from thereabove, while being stirred, to convert a part of monomers into a polymer, thereby adjusting the viscosity thereof to a coatable level to obtain an acrylic monomer-polymer mixture. 5 weight parts of the acrylic polymer obtained in Production Example 1, and 0.08 weight parts of 1,6-hexanediol diacrylate (trade name "A-HD-N", manufactured by Shin-Nakamura Chemical Co., Ltd.), were put into the obtained acrylic monomer-polymer mixture. The resulting resin composition was applied to the surface of a separator (trade name "MRF38" manufactured by Mitsubishi Plastics, Inc., thickness: 38 µm) using an applicator. Then, after bonding a cover separator (trade name "MRF38" manufactured by Mitsubishi Plastics, Inc., thickness: 38 µm) to the applied resin composition by a hand roller, the resin composition was irradiated with ultraviolet light from an ultraviolet lamp (ultraviolet illuminance: 3.4 mW/cm², cumulative dose: 2,000 mJ/cm²) to obtain a 50 µm-thick pressure-sensitive adhesive composition.

### < Production of Antifouling Layer-Including Pressure-Sensitive Adhesive Film >

The pressure-sensitive adhesive layer obtained in Comparative Example 8 was bonded to the substrate layer of the 200 µm-thick, antifouling layer-attached substrate layer (antifouling layer (thickness: 100 µm)/substrate layer (thickness: 100 µm)) obtained in Comparative Example 8, using a laminator to obtain an antifouling layer-including pressure-sensitive adhesive film consisting of "antifouling layer (thickness: 100 µm)/substrate layer (thickness: 100 µm)/ pressure-sensitive adhesive layer (thickness: 50 µm)).

Properties of the antifouling layer-including pressure-sensitive adhesive film (aquatic organism adherence preventive film) required when equipped in a drifting or anchored buoy the submersible sensor unit include; (1) a property of keeping aquatic organisms from adhering thereto even at a low flow velocity; (2) a property of being peelable off from an adherend, for the purpose of film replacement; and (3) a property of being free from peel-off of the antifouling layer of the film even after long-term use (assumed period: about 6 months).

With regard to the property of keeping aquatic organisms from adhering thereto even at a low flow velocity, the antifouling layer-including pressure-sensitive adhesive film was subjected to measurement of a water contact angle. With regard to the property of being peelable off from an adherend, the antifouling layer-including pressure-sensitive adhesive film was subjected to measurement of the ratio of a breaking strength to an adhesive force thereof. With regard to the property of being free from peel-off of the antifouling layer from the substrate layer of the film, the antifouling layer-including pressure-sensitive adhesive film was subjected to a cross-cut test. An evaluation method for each of the properties is as follows.

Each of the antifouling layer-including pressure-sensitive adhesive films obtained in the above Inventive and Comparative Examples was subjected to the following evaluations. The result is shown in Table 2.

**TABLE 2**

| | Water Contact Angle (°) | | Cross-Cut (Number of peeled cells) | Tensile Breaking Strength after 60°C×4 days (N/20 mm) | Adhesive Force after 60°C×4 days (N/20 mm) | Ratio of Tensile Breaking Strength to Adhesive Force | Peelability |
|---|---|---|---|---|---|---|---|
| | Initial | After immersion in methanol for 20 min | | | | | |
| Inventive Example 1 | 25.0 | 50.1 | 0/100 | 64.7 | 7.5 | 8.6 | Peeled off without breaking |
| Inventive Example 2 | 43.1 | 56.0 | 0/100 | 63.7 | 7.3 | 8.7 | Peeled off without breaking |
| Inventive Example 3 | 42.2 | 57.0 | 0/100 | 66.1 | 7.7 | 8.6 | Peeled off without breaking |
| Inventive Example 4 | 46.5 | 67.5 | 0/100 | 65.5 | 8.4 | 7.8 | Peeled off without breaking |
| Inventive Example 5 | 43.3 | 58.2 | 0/100 | 63.0 | 7.8 | 8.1 | Peeled off without breaking |
| Inventive Example 6 | 56.7 | 69.5 | 0/100 | 62.1 | 7.3 | 8.5 | Peeled off without breaking |
| Inventive Example 7 | 24.5 | 48.2 | 0/100 | 63.0 | 7.8 | 8.1 | Peeled off without breaking |
| Inventive Example 8 | 23.8 | 47.8 | 0/100 | 66.3 | 8.1 | 8.2 | Peeled off without breaking |
| Inventive Example 9 | 23.7 | 48.4 | 0/100 | 66.4 | 6.2 | 10.7 | Peeled off without breaking |
| Inventive Example 10 | 24.5 | 49.7 | 0/100 | 63.5 | 22.0 | 2.9 | Peeled off without breaking |
| Inventive Example 11 | 24.2 | 48.5 | 0/100 | 39.9 | 13.5 | 3.0 | Peeled off without breaking |
| Inventive Example 12 | 24.8 | 49.6 | 0/100 | 198.0 | 11.6 | 17.1 | Peeled off without breaking |
| Inventive Example 13 | 23.7 | 49.0 | 0/100 | 27.2 | 18.0 | 1.5 | Peeled off without breaking |
| Inventive Example 14 | 25.3 | 51.2 | 0/100 | 53.7 | 8.5 | 6.3 | Peeled off without breaking |
| Inventive Example 15 | 25.5 | 52.8 | 0/100 | 142.4 | 17.5 | 8.1 | Peeled off without breaking |
| Inventive Example 16 | 24.8 | 49.3 | 0/100 | 101.1 | 12.0 | 8.4 | Peeled off without breaking |
| Inventive Example 17 | 25.1 | 50.6 | 0/100 | 98.2 | 11.8 | 8.3 | Peeled off without breaking |
| Inventive Example 18 | 40.2 | 55.2 | 0/100 | 63.5 | 7.4 | 8.6 | Peeled off without breaking |
| Comprative Example 1 | 103.0 | 103.2 | 0/100 | 62.4 | 8.2 | 7.6 | Peeled off without breaking |
| Comprative Example 2 | 74.0 | 91.3 | 0/100 | 65.6 | 8.4 | 7.8 | Peeled off without breaking |
| Comprative Example 3 | 24.8 | 49.4 | 100/100 | 110.3 | 9.0 | 12.3 | Peeled off without breaking |
| Comprative Example 4 | 24.5 | 49.7 | 0/100 | 14.5 | 12.5 | 1.2 | Broke during peeling |
| Comprative Example 5 | 98.7 | 96.6 | 0/100 | 89.7 | 10.5 | 8.5 | Peeled off without breaking |
| Comprative Example 6 | 49.5 | 56.7 | 100/100 | 107.1 | 11.3 | 9.5 | Peeled off without breaking |
| Comprative Example 7 | 65.4 | 82.7 | 0/100 | 109.3 | 14.6 | 7.5 | Peeled off without breaking |
| Comprative Example 8 | 52.3 | 62.7 | 0/100 | 67.8 | N on-measure able | | Pressure-sensitive adhesive remained on adherend |

### (Water Contact Angle in Initial State)

Each evaluation sample cut into a size of 10 mm × 30 mm was fixed onto a glass plate by a double-faced adhesive tape, and set in a contact angle meter (Model: DROPMASTER-701, manufactured by Kyowa interface Science Co., Ltd.). A 2.0 µL droplet of distillated water was attached to the surface of the sample, and, after the elapse of 300 seconds since the start of the attachment, a contact angle (room temperature (23°C) was measured by a measurement mode of a θ /2 (half-angle) method.

### (Water Contact Angle in State after Immersion in Methanol for 20 Minutes)

Each sample cut into a size of 50 mm × 50 mm and having a PET film attached to the pressure-sensitive adhesive layer thereof was immersed in 100 mL methanol at room temperature (23°C) for 20 minutes. Subsequently, the sample was pulled up from the methanol, and, prewashed by distillated water to remove methanol attached thereto. Then, the sample was air-dried at room temperature for 12 hours to prepare an evaluation sample.

The evaluation sample after being cut into a size of 10 mm × 30 mm was fixed onto a glass plate by a double-faced adhesive tape, and set in the contact angle meter (Model: DROPMASTER-701, manufactured by Kyowa interface Science Co., Ltd.). A 2.0 µL droplet of distillated water was attached to the surface of the sample, and, after the elapse of 300 seconds since the start of the attachment, the contact angle (room temperature (23°C) was measured by the measurement mode of the θ /2 (half-angle) method.

### (Cross-Cut Stretching Test)

Each sample was cut into a size of 20 mm × 70 mm, and a plurality of slits (11 slits extending in each of two orthogonal directions) were made by a cutter at intervals of 1 mm to extend at an angle of 45 degrees with respect to long sides of the sample, and have a depth at which only the antifouling layer is cut off, thereby forming a 10 × 10 lattice pattern. The lattice was formed in a central area of the sample. The sample was set in a tensile tester (AUTOGRAPH AGS-X, manufactured by Shimadzu Corporation), such that the slit area thereof was centrally located, at an inter-chuck distance of 50 mm, and stretched in a longitudinal direction at a stretching speed of 300 mm/min until the inter-chuck distance becomes 75 mm (stretching ratio: 1.5). After leaving the sample in the stretched state for 1 minute, the number of cells of the antifouling layer peeled off from the substrate layer was evaluated.

### (Tensile Breaking Strength (after 60°C × 4 days)

After attaching a separator (trade name "MRF38", manufactured by Mitsubishi Plastics, Inc., thickness: 38 µm) to the pressure-sensitive adhesive layer of each sample, the sample was immersed in pure water at 60°C for 4 days. After pulling-up, water on the sample was wiped away, and the sample was left at room temperature (23°C) for 1 hour. Then, the sample was cut into a size of 20 mm width × 100 mm length. After peeling off the separator from the pressure-sensitive adhesive layer, the resulting sample was set in a tensile tester (AUTOGRAPH AGS-X, manufactured by Shimadzu Corporation) at an inter-chuck distance of 20 mm, and stretched at room temperature (23°C) and at a stretching speed of 300 mm/min until the sample breaks, thereby evaluating a tensile breaking strength.

### (Adhesive Force Test (after 60°C × 4 days))

Each sample cut into a size of 20 mm width × 80 mm length was laminated to (bright annealed (BA-)) SUS 304 at room temperature (23°C) by one strike of a 2-kg roller. Then, after leaving the resulting laminate at room temperature (23°C) for 12 hours, the laminate was stored in pure water at 60°C for 4 days. After pulling-up, water on the laminate was wiped away, and the laminate was left at room temperature (23°C) for 1 hour. Then, the sample was peeled off from the (BA-) SUS 304 at room temperature (23°C) and at a peel angle of 180°. A force during the peeling was measured by using a tensile tester (AUTOGRAPH AGS-X, manufactured by Shimadzu Corporation), and defined as an adhesive force. With regard to Reference Example 8, as a result of this test, the pressure-sensitive adhesive layer was peeled off from the substrate layer, and remained on (BA-) SUS 304, so that it was "non-measureable". In this case, the adhesive force is infinity, and thus the ratio of the tensile breaking strength (N/20 mm) / the adhesive force (N/20 mm) is regarded as 0.

### (Peelability)

Each sample cut into a size of 20 mm width × 80 mm length was laminated to BA-) SUS 304 at room temperature (23°C) by one strike of a 2-kg roller. Then, after leaving the resulting laminate at room temperature (23°C) for 12 hours, the laminate was stored in pure water at 60°C for 4 days. After pulling-up, water on the laminate was wiped away, and the laminate was left at room temperature (23°C) for 1 hour. Then, the sample was peeled off from the SUS 304 at a peel angle of 145 to 180°, to evaluate whether the sample is broken during the peeling.

As shown in Table 2, it has been confirmed that the antifouling layer-including pressure-sensitive adhesive film can be peeled off without breaking, as long as the ratio of the ratio of the tensile breaking strength/the adhesive force is 1.5 or more. In each of Inventive Examples 1 to 18, the ratio of the tensile breaking strength/the adhesive force is 1.5 or more.

### (Measurement of Ultrasonic Wave Attenuation Amount)

The measurement of attenuation of an ultrasonic wave is performed by a two-probe method in the following manner. A 6-L plastic container (20 cm × 30 cm × 10 cm depth) was filled with pure water at room temperature (23°C). Then, after putting therein an ultrasonic concentration meter (AM1S-10S-1A (measurement frequency: 1 MHz) manufactured by Ultrasonic Engineering Co., Ltd., sensor pitch: 100 mm), the container was left untouched for 30 minutes or more to reduce temperature variation. A zero point adjustment was performed by a converter (AE4 (UAM-4MK2) manufactured by Ultrasonic Engineering Co., Ltd.), such that the attenuation amount becomes 0 db in a state before attaching a sample. A sample was cut into a circular shape having a diameter of 30 mm. Then, the sample (film, grease) was pressed against and attached to a sonic wave transmitting and receiving part in water, while avoiding taking in an air bubble. When an air bubble or the like adheres to the surface of the sample, it was removed by a brush. After the elapse of 120 seconds since the attachment of the sample, the attenuation amount (db) at 1 MHz = 20 × Log (P / PO) was measured, where P denotes a received sound pressure intensity in the presence of the sample, and P0 denotes a

### (Visible Light Transmittance)

Each sample cut into a size of 20 mm × 20 mm was set in a measurement part of an integrating sphere unit (ISV-722, manufactured by JASCO Corporation) of an ultraviolet-visible spectrophotometer (V-660, manufactured by JASCO Corporation) to measure a transmittance in a wavelength range of 400 to 800 nm.

As a result of the measurement for Inventive Example 1, the transmittance was 91.5%, 92.8% and 93.1%, respectively, at 400 nm, 600 nm and 800 nm. Further, Inventive Examples 1, 7 and 8 were subjected to the measurement of the ultrasonic wave attenuation amount. As a result, the attenuation amounts thereof were, respectively, 2.7 db, 1.3 db, and 3.2 db, each of which was equivalent to or, equal to or less than that in the conventional measure.

Further, in order to confirm a relationship between antifouling capability against barnacles and the water contact angle, the following reference experiment was conducted.

### [Reference Example 1]

### < Production of Laminate of Antifouling Layer / Substrate Layer >

100 weight parts (agent A: 50 weight parts, agent B: 50 weight parts) of silicone resin (addition-type liquid silicone resin, trade name "KE-1935", manufactured by Shin-Etsu Chemical Co. Ltd.), 32 weight parts of dimethyl silicone oil (trade name "KF96-100cs", manufactured by Shin-Etsu Chemical Co. Ltd.), 18 weight parts of alkyl-modified silicone oil (trade name "KF415", manufactured by Shin-Etsu Chemical Co. Ltd.), and 5 weight parts of polyether-modified silicone oil (trade name "KF6016", manufactured by Shin-Etsu Chemical Co. Ltd.), were mixed together, and the resulting mixture was steered at room temperature (23°C) for 5 minutes to obtain an antifouling layer-forming material liquid. The obtained antifouling layer-forming material liquid was applied onto the surface of an ionomer substrate (trade name "Himilan 1855", manufactured by Dupont-Mitsui Polychemicals Co., Ltd., thickness: 100 µm), using an applicator, and then cured at 140°C for 2 minutes to obtain a 200 µm-thick, antifouling layer-attached substrate layer (antifouling layer (thickness: 100 µm)/substrate layer (thickness: 100 µm)).

### < Production of Pressure-Sensitive Adhesive Layer)

A 50 µm-thick pressure-sensitive adhesive composition was obtained in the same manner as that in Inventive Example 1.

### < Production of Antifouling Layer-Including Pressure-Sensitive Adhesive Film >

The pressure-sensitive adhesive layer obtained in Reference Example 1 was bonded to the substrate layer of the 200 µm-thick, antifouling layer-attached substrate layer (antifouling layer (thickness: 100 µm)/substrate layer (thickness: 100 µm)) obtained in Reference Example 1, using a laminator to obtain an antifouling layer-including pressure-sensitive adhesive film consisting of "antifouling layer (thickness: 100 µm)/substrate layer (thickness: 100 µm)/ pressure-sensitive adhesive layer (thickness: 50 µm)).

### [Reference Example 2]

### < Production of Laminate of Antifouling Layer / Substrate Layer >

100 weight parts (agent A: 50 weight parts, agent B: 50 weight parts) of silicone resin (addition-type liquid silicone resin, trade name "KE-1935", manufactured by Shin-Etsu Chemical Co. Ltd.), 13 weight parts of dimethyl silicone oil (trade name "KF96-100cs", manufactured by Shin-Etsu Chemical Co. Ltd.), 7 weight parts of alkyl-modified silicone oil (trade name "KF415", manufactured by Shin-Etsu Chemical Co. Ltd.), and 5 weight parts of polyether-modified silicone oil (trade name "KF6016", manufactured by Shin-Etsu Chemical Co. Ltd.), were mixed together, and the resulting mixture was steered at room temperature (23°C) for 5 minutes to obtain an antifouling layer-forming material liquid. The obtained antifouling layer-forming material liquid was applied onto the surface of an ionomer substrate (trade name "Himilan 1855", manufactured by Dupont-Mitsui Polychemicals Co., Ltd., thickness: 100 µm), using an applicator, and then cured at 140°C for 2 minutes to obtain a 200 µm-thick, antifouling layer-attached substrate layer (antifouling layer (thickness: 100 µm)/substrate layer (thickness: 100 µm)).

### < Production of Antifouling Layer-Including Pressure-Sensitive Adhesive Film >

The pressure-sensitive adhesive layer obtained in Reference Example 1 was bonded to the substrate layer of the 200 µm-thick, antifouling layer-attached substrate layer (antifouling layer (thickness: 100 µm)/substrate layer (thickness: 100 µm)) obtained in Reference Example 2, using a laminator to obtain an antifouling layer-including pressure-sensitive adhesive film consisting of "antifouling layer (thickness: 100 µm)/substrate layer (thickness: 100 µm)/ pressure-sensitive adhesive layer (thickness: 50 µm)).

### [Reference Example 3]

### < Production of Laminate of Antifouling Layer / Substrate Layer >

100 weight parts (agent A: 50 weight parts, agent B: 50 weight parts) of silicone resin (addition-type liquid silicone resin, trade name "KE-1935", manufactured by Shin-Etsu Chemical Co. Ltd.), 19 weight parts of dimethyl silicone oil (trade name "KF96-100cs", manufactured by Shin-Etsu Chemical Co. Ltd.), 11 weight parts of alkyl-modified silicone oil (trade name "KF415", manufactured by Shin-Etsu Chemical Co. Ltd.), and 3 weight parts of polyether-modified silicone oil (trade name "KF6016", manufactured by Shin-Etsu Chemical Co. Ltd.), were mixed together, and the resulting mixture was steered at room temperature (23°C) for 5 minutes to obtain an antifouling layer-forming material liquid. The obtained antifouling layer-forming material liquid was applied onto the surface of an ionomer substrate (trade name "Himilan 1855", manufactured by Dupont-Mitsui Polychemicals Co., Ltd., thickness: 100 µm), using an applicator, and then cured at 140°C for 2 minutes to obtain a 200 µm-thick, antifouling layer-attached substrate layer (antifouling layer (thickness: 100 µm)/substrate layer (thickness: 100 µm)).

### < Production of Antifouling Layer-Including Pressure-Sensitive Adhesive Film >

The pressure-sensitive adhesive layer obtained in Reference Example 1 was bonded to the substrate layer of the 200 µm-thick, antifouling layer-attached substrate layer (antifouling layer (thickness: 100 µm)/substrate layer (thickness: 100 µm)) obtained in Reference Example 3, using a laminator to obtain an antifouling layer-including pressure-sensitive adhesive film consisting of "antifouling layer (thickness: 100 µm)/substrate layer (thickness: 100 µm)/ pressure-sensitive adhesive layer (thickness: 50 µm)).

### [Reference Example 4]

### < Production of Laminate of Antifouling Layer / Substrate Layer >

100 weight parts (agent A: 50 weight parts, agent B: 50 weight parts) of silicone resin (addition-type liquid silicone resin, trade name "KE-1935", manufactured by Shin-Etsu Chemical Co. Ltd.), 26 weight parts of dimethyl silicone oil (trade name "KF96-100cs", manufactured by Shin-Etsu Chemical Co. Ltd.), 15 weight parts of alkyl-modified silicone oil (trade name "KF415", manufactured by Shin-Etsu Chemical Co. Ltd.), and 1 weight part of polyether-modified silicone oil (trade name "KF6016", manufactured by Shin-Etsu Chemical Co. Ltd.), were mixed together, and the resulting mixture was steered at room temperature (23°C) for 5 minutes to obtain an antifouling layer-forming material liquid. The obtained antifouling layer-forming material liquid was applied onto the surface of an ionomer substrate (trade name "Himilan 1855", manufactured by Dupont-Mitsui Polychemicals Co., Ltd., thickness: 100 µm), using an applicator, and then cured at 140°C for 2 minutes to obtain a 200 µm-thick, antifouling layer-attached substrate layer (antifouling layer (thickness: 100 µm)/substrate layer (thickness: 100 µm)).

### < Production of Antifouling Layer-Including Pressure-Sensitive Adhesive Film >

The pressure-sensitive adhesive layer obtained in Reference Example 1 was bonded to the substrate layer of the 200 µm-thick, antifouling layer-attached substrate layer (antifouling layer (thickness: 100 µm)/substrate layer (thickness: 100 µm)) obtained in Reference Example 4, using a laminator to obtain an antifouling layer-including pressure-sensitive adhesive film consisting of "antifouling layer (thickness: 100 µm)/substrate layer (thickness: 100 µm)/ pressure-sensitive adhesive layer (thickness: 50 µm)).

### [Reference Example 5]

### < Production of Laminate of Antifouling Layer / Substrate Layer >

100 weight parts (agent A: 50 weight parts, agent B: 50 weight parts) of silicone resin (addition-type liquid silicone resin, trade name "KE-1935", manufactured by Shin-Etsu Chemical Co. Ltd.), 19 weight parts of dimethyl silicone oil (trade name "KF96-100cs", manufactured by Shin-Etsu Chemical Co. Ltd.), 11 weight parts of alkyl-modified silicone oil (trade name "KF415", manufactured by Shin-Etsu Chemical Co. Ltd.), and 1 weight part of polyether-modified silicone oil (trade name "KF6016", manufactured by Shin-Etsu Chemical Co. Ltd.), were mixed together, and the resulting mixture was steered at room temperature (23°C) for 5 minutes to obtain an antifouling layer-forming material liquid. The obtained antifouling layer-forming material liquid was applied onto the surface of an ionomer substrate (trade name "Himilan 1855", manufactured by Dupont-Mitsui Polychemicals Co., Ltd., thickness: 100 µm), using an applicator, and then cured at 140°C for 2 minutes to obtain a 200 µm-thick, antifouling layer-attached substrate layer (antifouling layer (thickness: 100 µm)/substrate layer (thickness: 100 µm)).

### < Production of Antifouling Layer-Including Pressure-Sensitive Adhesive Film >

The pressure-sensitive adhesive layer obtained in Reference Example 1 was bonded to the substrate layer of the 200 µm-thick, antifouling layer-attached substrate layer (antifouling layer (thickness: 100 µm)/substrate layer (thickness: 100 µm)) obtained in Reference Example 5, using a laminator to obtain an antifouling layer-including pressure-sensitive adhesive film consisting of "antifouling layer (thickness: 100 µm)/substrate layer (thickness: 100 µm)/ pressure-sensitive adhesive layer (thickness: 50 µm)).

### [Reference Example 6]

### < Production of Laminate of Antifouling Layer / Substrate Layer >

100 weight parts (agent A: 50 weight parts, agent B: 50 weight parts) of silicone resin (addition-type liquid silicone resin, trade name "KE-1935", manufactured by Shin-Etsu Chemical Co. Ltd.), 13 weight parts of dimethyl silicone oil (trade name "KF96-100cs", manufactured by Shin-Etsu Chemical Co. Ltd.), 7 weight parts of alkyl-modified silicone oil (trade name "KF415", manufactured by Shin-Etsu Chemical Co. Ltd.), and 1 weight part of polyether-modified silicone oil (trade name "KF6016", manufactured by Shin-Etsu Chemical Co. Ltd.), were mixed together, and the resulting mixture was steered at room temperature (23°C) for 5 minutes to obtain an antifouling layer-forming material liquid. The obtained antifouling layer-forming material liquid was applied onto the surface of an ionomer substrate (trade name "Himilan 1855", manufactured by Dupont-Mitsui Polychemicals Co., Ltd., thickness: 100 µm), using an applicator, and then cured at 140°C for 2 minutes to obtain a 200 µm-thick, antifouling layer-attached substrate layer (antifouling layer (thickness: 100 µm)/substrate layer (thickness: 100 µm)).

### < Production of Antifouling Layer-Including Pressure-Sensitive Adhesive Film >

The pressure-sensitive adhesive layer obtained in Reference Example 1 was bonded to the substrate layer of the 200 µm-thick, antifouling layer-attached substrate layer (antifouling layer (thickness: 100 µm)/substrate layer (thickness: 100 µm)) obtained in Reference Example 6, using a laminator to obtain an antifouling layer-including pressure-sensitive adhesive film consisting of "antifouling layer (thickness: 100 µm)/substrate layer (thickness: 100 µm)/ pressure-sensitive adhesive layer (thickness: 50 µm)).

### (Evaluation of Antifouling Capability)

Each evaluation sample was laminated to a polyvinyl chloride plate (trade name "KP plate", manufactured by Sumitomo Bakelite Co., Ltd.) having a size of 100 mm × 150 mm, using a laminator, to obtain an antifouling property evaluation plate. The obtained antifouling property evaluation plate was immersed in the sea along the coast of Gamagori City of Aichi Prefecture at a water depth of 1 m, for 1 month. Then, the number of barnacles adhering to the surface of the antifouling layer-including pressure-sensitive adhesive film was visually evaluated.

A result of the evaluation is shown in Table 3

**TABLE 3**

| | Composition of Antifouling Layer (part) | | | | | Water Contact Angle (°) after Immersion in Methanol for 20 min | Number of barnacles (pieces/150 cm)² |
|---|---|---|---|---|---|---|---|
| | KE-1935 | KF96-100cs | KF415 | KF6016 | Thickness (µm) | | |
| Reference Example 1 | 100 | 32 | 18 | 5 | 100 | 38 | 0 |
| Reference Example 2 | 100 | 13 | 7 | 5 | 100 | 46 | 0 |
| Reference Example 3 | 100 | 19 | 11 | 3 | 100 | 59 | 0 |
| Reference Example 4 | 100 | 26 | 15 | 1 | 100 | 74 | 0 |
| Reference Example 5 | 100 | 19 | 11 | 1 | 100 | 89 | 18 |
| Reference Example 6 | 100 | 13 | 7 | 1 | 100 | 97 | 30 |

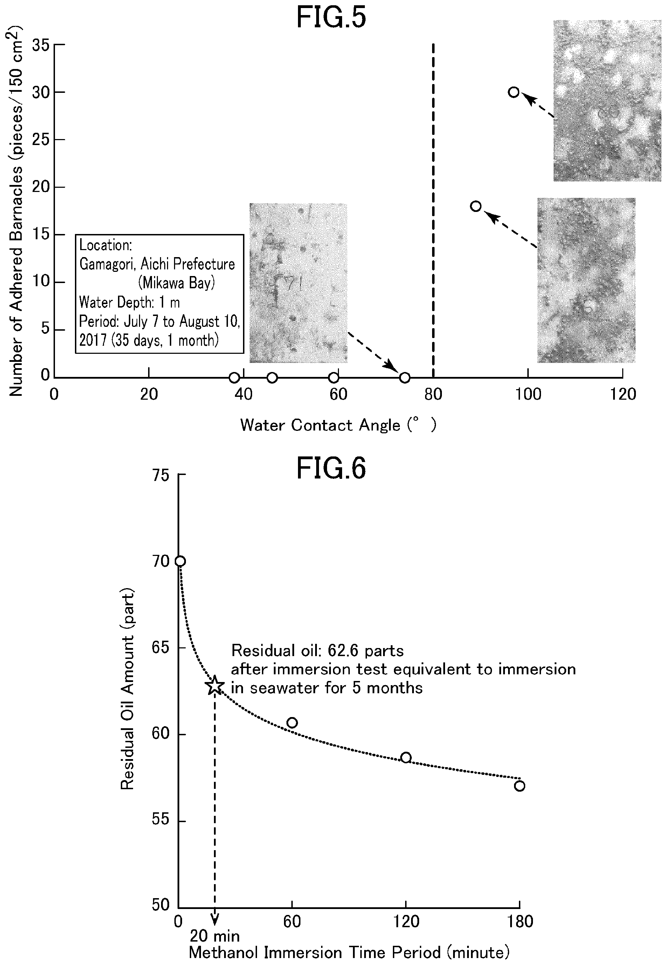

FIG. 5 is a graph showing a relationship between the water contact angle of the antifouling layer of the aquatic organism adherence preventive film (antifouling layer-including pressure-sensitive adhesive film) and adherence of organisms. In a case where the water contact angle is used as an index for evaluating a hydrophilic property, it has been confirmed that aquatic organisms such as barnacles will not adhere as long as the water contact angle of the aquatic organism adherence preventive film is about 80 degrees or less. Thus, the point that the water contact angle of the aquatic organism adherence preventive film is about 80 degrees or less is one condition for preventing adherence of aquatic organisms.

FIG. 6 is a graph showing a relationship between seawater immersion and methanol immersion of the antifouling layer of the aquatic organism adherence preventive film. When the aquatic organism adherence preventive film is immersed in seawater for a long period of time, the oil component is diffused from the antifouling layer toward the seawater. This diffusion from the antifouling layer toward the seawater can be promoted by means of methanol immersion, so that it is possible to substantially evaluate performance of the aquatic organism adherence preventive film within a short period of time. The amount of the oil component of the antifouling layer of the aquatic organism adherence preventive film being immersed in methanol was successively observed after elapsed of 0 min, 60 min, 120 min and 180 min, and each observed value was plotted on a graph with a circular mark to draw a curve. As a result, it has been confirmed that the oil component logarithmically decreases.

Further, a value (amount of the oil component: 62.6 parts) actually measured after immersing the aquatic organism adherence preventive film in seawater for 5 months was plotted on the curve (based on the circular marks) of the graph regarding the methanol immersion, with a star mark. As a result, it has been confirmed that the value corresponds to a methanol immersion time period of 20 minutes. Considering the above, as long as the water contact angle of the antifouling layer is 80 degrees or less at the time after immersion in seawater for 5 months, aquatic organisms such as barnacles will not adhere for one month since that time. Therefore, as long as the water contact angle of the antifouling layer after immersion in methanol for 20 minutes is 80 degrees or less, the antifouling layer has antifouling capability equivalent to that against immersion in seawater for 6 months.

As shown in Table 2, the water contact angle after immersion in methanol for 20 minutes (equivalent to immersion in seawater for 5 months) in each of Inventive Examples 1 to 18 is 80 degrees or less. Thus, it is confirmed that the aquatic organism adherence preventive film in each of Inventive Examples 1 to 18 has antifouling capability equivalent to that against immersion in seawater for 6 months. Assume that the aquatic organism adherence preventive film in each of Inventive Examples 1 to 18 is attached to the underwater structure. In this case, at least within a use period of about six months, it is possible to almost completely prevent adherence of aquatic organisms by the antifouling layer on the surface of the aquatic organism adherence preventive film.

### (Antifouling Performance of Antifouling Layer-Including Pressure-Sensitive Adhesive Film Containing only Hydrophilic Oil)

Using laminate and film production methods similar to those for Inventive Examples and Comparative Examples in Table 1, and a test method similar to that used for obtaining the antifouling layer-including pressure-sensitive adhesive film evaluation results shown in Tables 2 and 3, antifouling performance of an antifouling layer-including pressure-sensitive adhesive film containing only hydrophilic oil and exhibiting a water contact angle of 80 degrees or less was evaluated. A result of the evaluation is shown in Table 4. Reference Example 7 in Table 4 is an antifouling layer-including pressure-sensitive adhesive film produced in the same manner as that in Inventive Example 1, except that it contains silicone oil consisting only of hydrophilic oil, i.e., the ratio of hydrophobic oil (KF96-100cs) to hydrophilic oil (KF6016) is set to 0 part/5 parts. Further, Reference Example 8 in Table 4 is shown for comparison with Reference Example 7, and is an antifouling layer-including pressure-sensitive adhesive film produced in the same manner as that in Inventive Example 1, except that the ratio of hydrophobic oil (KF96-100cs) to hydrophilic oil (KF6016) is set to 55 parts/5 parts.

**TABLE 4**

| | Composition of Antifouling Layer (part) | | | | | Water Contact Angle (°) after Immersion in Methanol for 20 min | Number of barnacles (pieces/150 cm)² |
|---|---|---|---|---|---|---|---|
| | KE-1935 | KF96-100cs | KF415 | KF6016 | Thickness (µm) | | |
| Reference Example 7 | 100 | 0 | 0 | 5 | 100 | 59.8 | 3 |
| Reference Example 8 | 100 | 55 | 0 | 5 | 100 | 50.1 | 0 |

The water contact angles after immersion in methanol for 20 min (equivalent to immersion in seawater for 5 months) in Reference Examples 7 and 8 are, respectively, 59.8 degrees and 50.1 degrees, each of which is equal to or less than about 80 degrees. Thus, it is confirmed that the antifouling layer-including pressure-sensitive adhesive film in each of Reference Examples 7 and 8 has antifouling capability equivalent to that against immersion in seawater for 6 months.

As a result of evaluating Reference Examples 7 and 8 by the antifouling capability evaluation method used for obtaining the evaluation result shown in Table 3, the number of barnacles per 150 cm₂ is 3 in Reference Example 7, and 0 in Reference Example 8. Thus, it has been confirmed that even an antifouling layer-including pressure-sensitive adhesive film containing only hydrophilic oil, as in Reference Example 7, provides sufficient antifouling performance.

From the above evaluation results, when an aquatic organism adherence preventive film equivalent to that in Reference Example 7 is attached to an underwater structure, an antifouling layer on the surface of the aquatic organism adherence preventive film can almost completely prevent adherence of aquatic organisms to the underwater structure, at least within a use period of six months.

### (Evaluation of Adhesion Performance of Antifouling Layer-Including Pressure-Sensitive Adhesive Film)

Each sample of plural types of aquatic organism adherence preventive films (antifouling layer-including pressure-sensitive adhesive films) produced by variously changing the addition amount (weight part(s)) of each of hydrophobic oil and hydrophilic oil such as polyether-modified silicone oil to be contained in the aquatic organism adherence preventive film (antifouling layer-including pressure-sensitive adhesive film) according the present invention (see, e.g., Table 1) was stretched at a stretch ratio of 1.5 to 4 by a cross-cut stretching test used for obtaining the result shown in Table 2, to evaluate adhesion performance of each of the aquatic organism adherence preventive films during stretching. In the cross-cut stretching test conducted with respect to Inventive and Comparative Examples shown in Table 1, the antifouling layer-including pressure-sensitive adhesive film is stretched at a stretch ratio of 1.5 and observes the number of cells of the antifouling layer peeled off from the substrate layer of the film, as seen in the result shown in Table 2. Further, from a viewpoint of adhesion between the film substrate and the antifouling layer in the antifouling layer-including pressure-sensitive adhesive film, a combination ratio between hydrophilic oil and hydrophobic oil for allowing the antifouling layer to become less likely to be peeled off from a substrate layer even at a higher stretch ratio was confirmed. Basically, in the evaluation of adhesion performance, laminate and film production methods similar to those for Inventive Examples and Comparative Examples in Table 1, and a test method similar to that used for obtaining the antifouling layer-including pressure-sensitive adhesive film evaluation results shown in Tables 2 and 3 were used.

A result of the evaluation of adhesion performance of each antifouling layer-including pressure-sensitive adhesive film during stretching is shown in Table 5 to 7. Tables 5 to 7 show: a combination ratio between the addition amount (weight part(s)) of hydrophilic silicone oil, and the addition amount (weight part(s)) of hydrophobic silicone oil, in each sample of the antifouling layer-including pressure-sensitive adhesive films; and a stretch ratio at the time when the antifouling layer is peeled off from the substrate layer in the sample during stretching of the sample by the cross-cut stretching test.

**TABLE 5**

| Sample No. | Addition Amount (weight part(s)) of Hydrophilic Silicone Oil (Total amount of KF6013, KF6015, KF6016 and KF6017 | Addition Amount (weight part(s)) of hydrophobic Silicone Oil (Total amount of KF100cs, KF415, and KF50-100cs | | | | | | Silicone Oil (weight part(s))*: Contact angle NG | | W ater Contact Angle (°) after Im m ersion in Methanol for 20 m in |
|---|---|---|---|---|---|---|---|---|---|---|
| | | 1.5 @ Stretch ratio at peel-off | 2.0 @ Stretch ratio at peel-off | 2.5 @ Stretch ratio at peel-off | 3.0 @ Stretch ratio at peel-off | 3.5 @ Stretch ratio at peel-off | 4 @ Stretch Ratio at peel-off | Hydrophilic | Hydrophobic | |
| T27 | 20 | | 60.0 | | | | | 20 | 60.0 | 36 |
| T28 | 13 | | | 66.7 | | | | 13 | 66.7 | 37 |
| T29 | 11 | | | | 69.3 | | | 11 | 69.3 | 38 |
| T30 | 7 | | | | | 73.3 | | 7 | 73.3 | 41 |
| T31 | 4 | | | | | 76.0 | | 4 | 76.0 | 48 |
| T17 | 15 | | 45.0 | | | | | 15 | 45.0 | 39 |
| T18 | 10 | | | 50.0 | | | | 10 | 50.0 | 42 |
| T19 | 8 | | | 52.0 | | | | 8 | 52.0 | 42 |
| T20 | 5 | | | | | 55.0 | | 5 | 55.0 | 46 |
| T21 | 3 | | | | | | 57.0 | 3 | 57.0 | 58 |
| T22 | 10 | | 30.0 | | | | | 10 | 30.0 | 40 |
| T23 | 7 | | 33.3 | | | | | 7 | 33.3 | 42 |
| T24 | 5 | | | 34.7 | | | | 5 | 34.7 | 44 |
| T25 | 3 | | | | 36.7 | | | 3 | 36.7 | 54 |
| T26 | 2 | | | | 38.0 | | | 2 | 38.0 | 65 |
| KRT45 | 15 | | 55 | | | | | 15 | 55 | 36 |
| KRT65 | 10 | | | 60 | | | | 10 | 60 | 40 |
| KRT84 | 20 | 8.3 | | | | | | 20 | 8.3 | 41 |
| KRT98 | 3 | | | | | 67 | | 3 | 67 | 66 |
| KRT100 | 6 | | | | | 64 | | 6 | 64 | 44 |
| KRT101 | 7 | | | | 63 | | | 7 | 63 | 43 |
| KRT102 | 8 | | | 62 | | | | 8 | 62 | 40 |

**TABLE 6**

| Sample No. | Addition Amount (weight part(s)) of Hydroph ilc Silicone Oil (Total amount of KF6013, KF6015, KF6016 and KF6017 | Addition Amount (weight part(s)) of Hydrophobic Sillcone Oil (Total amount of KF100cs, KF415, and KF50-100cs | | | | | | Silicone Oil (w eight part(s)) *: Contact angle N G | | W ater Contact Angle (°) after Im m ersion in Methanol for 20 m in |
|---|---|---|---|---|---|---|---|---|---|---|
| | | 1.5 @ Stretch ratio at peel-off | 2.0 @ Stretch ratio at peel-off | 2.5 @ Stretch ratio at pee l-off | 3.0 @ Stretch ratio at peel-off | 3.5 @ Stretch ratio at peel-off | 4 @ Stretch Ratio at peel-off | Hydrophilic | Hydrophobic | |
| Inventive Examp le 1 | 15 | | 55 | | | | | 15 | 55 | 50.1 |
| Inventive Exam p le 2 | 10 | | 65 | | | | | 10 | 65 | 56 |
| Inventive Example 3 | 10 | | 60 | | | | | 10 | 60 | 57 |
| Inventive Example 4 | 10 | | 60 | | | | | 10 | 60 | 67.5 |
| Inventive Example 5 | 5 | | | | 65 | | | 5 | 65 | 58.2 |
| Inventive Example 6 | 6 | | 43 | | | | | 6 | 43 | 69.5 |
| Inventive Exam p le 7 | 15 | | 55 | | | | | 15 | 55 | 48.2 |
| Inventive Examp le 8 | 15 | | 55 | | | | | 15 | 55 | 47.8 |
| Inventive Examp le 9 | 15 | | 55 | | | | | 15 | 55 | 48.4 |
| Inventive Examp le 10 | 15 | | 55 | | | | | 15 | 55 | 49.7 |
| Inventive Examp le 11 | 15 | | 55 | | | | | 15 | 55 | 48.5 |
| Inventive Examp le 12 | 15 | | 55 | | | | | 15 | 55 | 49.6 |
| Inventive Example 13 | 15 | | 55 | | | | | 15 | 55 | 49 |
| Inventive Example 14 | 15 | | 55 | | | | | 15 | 55 | 51.2 |
| Inventive Examp le 15 | 15 | | 55 | | | | | 15 | 55 | 52.8 |
| Inventive Examp le 16 | 15 | | 55 | | | | | 15 | 55 | 49.3 |
| Inventive Examp le 17 | 15 | | 55 | | | | | 15 | 55 | 50.6 |
| Inventive Examp le 18 | 5 | | | | 65 | | | 5 | 65 | 55.2 |
| Com prative Examp le 1 | 0 | | | | 70 | | | 0* | 70* | 103.2 |
| Com prative Examp le 2 | 1 | | 45.5 | | | | | 1* | 45.5* | 91.3 |
| Com prative Exam p le 3 | 15 | 55 | | | | | | 15 | 55 | 49.4 |
| Com prative Examp le 4 | 15 | | 55 | | | | | 15 | 55 | 49.7 |
| Com prative Examp le 5 | 0 | | | | 10 | | | 0* | 10* | 96.6 |
| Com prative Examp le 6 | 30 | 60 | | | | | | 30 | 60 | 56.7 |
| Com prative Examp le 7 | 5 | | 75 | | | | | 5* | 75* | 82.7 |
| Com prative Examp le 8 | 20 | | 70 | | | | | 20 | 70 | 62.7 |

**TABLE 7**

| Sample No. | Additon Amount (weigtht part(s)) of Hydroph ilic Silicone Oil (Total amount of KF6013, KF6015, KF6016 and KF6017 | Addition Amount (weight part(s)) of Hydrophobic Sllicone Oil (Total amount of KF100cs, KF415, and KF50-100cs | | | | | | Silicone Oil (weight part(s)) *: Contact angle NG | | W ater Contact Angle (°) after Im m ersion in Methanol for 20 m in |
|---|---|---|---|---|---|---|---|---|---|---|
| | | 1.5 @ Stretch ratio at peel-off | 2.0 @ Stretch ratio at peel-off | 2.5 @ Stretch ratio at peel-off | 3.0 @ Stretch ratio at peel-off | 3.5 @ Stretch ratio at peel-off | 4 @ Stretch Ratio at p ee l-off | Hydrophilic | Hydrophobic | |
| KRT51 | 6 | | | 43 | | | | 6 | 43 | 70 |
| KRT99 | 4 | | | | | 66 | | 4 | 66 | 55 |
| KRT85 | 20 | 3.2 | | | | | | 20 | 3.2 | 52 |
| KRT133 | 10 | 0 | | | | | | 10 | 0 | 41 |
| KRT132 | 5 | | 0 | | | | | 5 | 0 | 60 |
| KRT66 | 20 | | 50 | | | | | 20 | 50 | 53 |
| KRT117 | 5 | | | | 25 | | | 5 | 25 | 68 |
| KRT118 | 5 | | | 15 | | | | 5 | 15 | 64 |
| KRT119 | 3 | | | | | 25 | | 3* | 25* | 86 |
| KRT120 | 3 | | | | 15 | | | 3* | 15* | 93 |
| KRT44 | 15 | | 55.0 | | | | | 15 | 55.0 | 57 |
| KRT134 | 5 | | | | | 150 | | 5 | 150 | 54 |
| KRT135 | 20 | | | | 150 | | | 20 | 150 | 40 |
| KRT136 | 20 | | | | 120 | | | 20 | 120 | 41 |
| KRT137 | 20 | | | 100 | | | | 20 | 100 | 42 |
| KRT138 | 20 | | | 80 | | | | 20 | 80 | 41 |
| KRT139 | 30 | | | 150 | | | | 30 | 150 | 39 |
| KRT140 | 30 | | | 120 | | | | 30 | 120 | 40 |
| KRT141 | 40 | | | 150 | | | | 40 | 150 | 39 |
| KRT95 | 30 | 40 | | | | | | 30 | 40 | 50 |
| KRT96 | 40 | 30 | | | | | | 40 | 30 | 45 |
| KRT97 | 50 | 20 | | | | | | 50 | 20 | 43 |

For example, in the antifouling layer-including pressure-sensitive adhesive film of the sample No. "T27" (Table 5), the addition amounts (weight parts) of hydrophilic silicone oil and hydrophobic silicone oil are, respectively, "20" and "60", and the stretch ratio at peel-off of the antifouling layer from the substrate layer of the film (hereinafter referred to as "stretch ratio at peel-off") is "2.0". Further, in the antifouling layer-including pressure-sensitive adhesive film of the sample No. "KRT51" (Table 7), the addition amounts (weight parts) of hydrophilic silicone oil and hydrophobic silicone oil are, respectively, "6" and "43", and the stretch ratio at peel-off of the antifouling layer from the substrate layer of the film (hereinafter referred to as "stretch ratio at peel-off") is "2.5". The samples of the antifouling layer-including pressure-sensitive adhesive films shown in Table 6 are the same films in Inventive Examples 1 to 18 and Comparative Examples 1 to 8 shown in Table 1. In the column "Silicone Oil (weight part(s))" on the right side of each of Tables 5 to 7, the addition amounts (weight parts) of hydrophilic silicone oil and hydrophobic silicone oil are described side-by-side, merely for the sake of organizing.

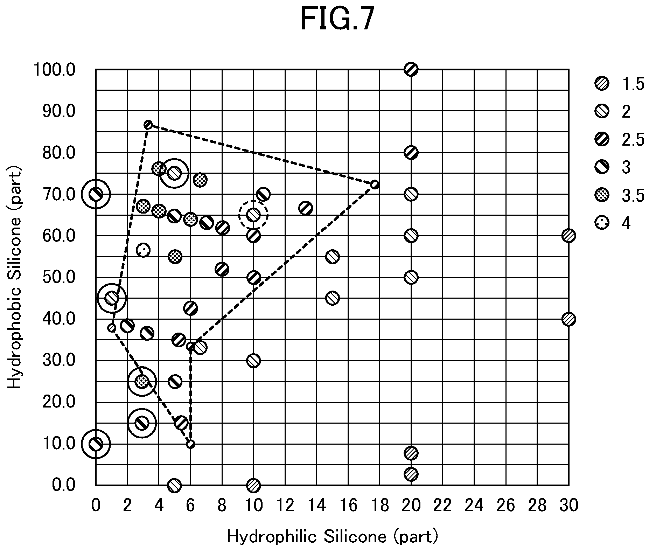

FIG. 7 is a plot diagram showing a relationship between the combination ratio between hydrophilic silicone oil and hydrophobic silicone oil, and the stretch ratio at peel-off of the antifouling layer, shown in Tables 5 to 7. On a plot diagram in which the X axis (horizontal axis) represents the addition amount (weight part(s)) of hydrophilic silicone oil (expressed as "Hydrophilic Silicone (part)"), and the Y axis (vertical axis) represents the addition amount (weight part(s)) of hydrophobic silicone oil (expressed as "Hydrophobic Silicone (part)"), six kinds of points each denoting a respective one of the samples having stretching ratios at peel-off of 1.5 to 4 are plotted. As the evaluation result of the adhesion performance of the antifouling layer-including pressure-sensitive adhesive film, it is confirmed that the sample falling within a region surrounded by the broken line (broken line region) described on the plot diagram shown in FIG. 7 has a stretching ratio at peel-off of 2.5 or more, i.e., is a desirable antifouling layer-including pressure-sensitive adhesive film.

The broken line on the X-Y coordinate is expressed as the following formulas of straight lines: y = - 5.6x + 43.6; x = 6; y = 3.3x + 14.3; y = 21x +17; and y = - x + 90, and the broken line region is a region surrounded by the 5 straight lines. The following discussion will be made by dividing the broken line region of the plot diagram in FIG. 7 into a triangular area and the remaining area. Firstly, discussing the triangular area in the broken line region, from a viewpoint of adhesion between the substrate layer and the antifouling layer of the film, among the samples of the antifouling layer-including pressure-sensitive adhesive films, a desirable one having a stretching ratio at peel-off of 2.5 or more falls within a region in which x is from 1 to 6 (1 ≤ x ≤ 6), and y is from (- 5.6x + 43.6) to 38 ((- 5.6x + 43.6) ≤ y ≤ 38), where x denotes the addition amount (weight part(s)) of hydrophilic silicone oil, and y denotes the addition amount (weight part(s)) of hydrophobic silicone oil.

Secondly, discussing the area other than triangular area, from a viewpoint of adhesion between the substrate layer and the antifouling layer of the film, among the samples of the antifouling layer-including pressure-sensitive adhesive films, a desirable one having a stretching ratio at peel-off of 2.5 or more falls within a region in which y is from (3.3x +14.3) to (21x + 17) ((3.3x +14.3) ≤ y ≤ (21x + 17)), and y is from 34 to (- x + 90) (34 ≤ y ≤ (- x + 90)), where x denotes the addition amount (weight part(s)) of hydrophilic silicone oil, and y denotes the addition amount (weight part(s)) of hydrophobic silicone oil. However, in the sample (Comparative Example 7) whose mark falls within the broken line region and is encircled by a circle, although the addition amount (weight part(s)) x of hydrophilic silicone oil is 5, and the addition amount (weight part(s)) y of hydrophobic silicone oil is 75, as assigned with the mark ^{∗} in the column "Silicone Oil (weight part(s))" in Tables 5 to 7, the water contact angle is 80 degrees or more. Therefore, this sample is excluded from the broken line region. Further, in the samples (Comparative Examples 1, 2 and 5, KRT119 and KRT120) each located outside the broken line region and encircled by a circle, the water contact angle is also 80 degrees or more. Further, in the sample (Reference Example 2) whose mark falls within the broken line region and is encircled by a broken line circle, although the addition amount (weight part(s)) x of hydrophilic silicone oil is 10, and the addition amount (weight part(s)) y of hydrophobic silicone oil is 65, the stretch ratio at peel-off is 2. Therefore, this sample is excluded from the broken line region indicating that the stretch ratio at peel-off is 2.5 or more. It is considered that this sample (Reference Example 2) fails to obtain a stretch ratio at peel-off of greater than 2, because it contains long-chain alkyl-modified silicone oil, wherein this silicone oil is contained more than other oil by a certain rate.

From the above evaluation result of the adhesion performance of each antifouling layer-including pressure-sensitive adhesive film (Tables 5 to 7), it is possible to set a desired region of the combination ratio between hydrophilic oil and hydrophobic oil of antifouling layer-including pressure-sensitive adhesive film in view of the adhesion.

### INDUSTRIAL APPLICABILITY

As mentioned above, the present invention can be advantageously used for preventing adhesion of aquatic organisms to an underwater structure receiving almost no water flow resistance.

### LIST OF REFERENCE SIGNS

- 100:: aquatic organism adherence preventive film
- 110:: antifouling layer
- 120:: substrate layer
- 130:: pressure-sensitive adhesive layer
- 140:: release liner
- 150:: protective film
- 200:: submersible sensor unit (multi-layer flow direction/velocity meter)
- 210:: sensor (ultrasonic transmitting part)
- 212:: mounting member

## Claims

1. An aquatic organism adherence preventive film to be attached to an underwater structure, comprising: a pressure-sensitive adhesive layer to be bonded to the underwater structure; a substrate layer on the pressure-sensitive adhesive layer; and an antifouling layer on the substrate, wherein:
a water contact angle with respect to the antifouling layer as measured after 5 minutes have elapsed since operation of causing the antifouling layer to be in contact with methanol for 20 minutes, and then dropping water on the antifouling layer is 80 degrees or less;
a ratio of a tensile breaking strength (N/20 mm) as measured after immersion in pure water at 60°C for 4 days to an adhesive force (N/20mm) with respect to the underwater structure, as measured after immersion in pure water at 60°C for 4 days, is 1.5 or more; and
a 1-mm square cross-cut stretching-caused peeling degree of the antifouling layer with respect to the substrate layer is 0.30 or less.

2. The aquatic organism adherence preventive film as recited in claim 1, wherein the antifouling layer contains silicone resin.

3. The aquatic organism adherence preventive film as recited in claim 2, wherein the silicone resin is addition-type silicone resin.

4. The aquatic organism adherence preventive film as recited in claim 2 or 3, wherein the antifouling layer further contains silicone oil.

5. The aquatic organism adherence preventive film as recited in claim 4, wherein the silicone oil includes polyether-modified silicone oil.

6. The aquatic organism adherence preventive film as recited in any one of claims 1 to 5, wherein the substrate layer comprises a polyethylene-based ionomer substrate.

7. The aquatic organism adherence preventive film as recited in any one of claims 1 to 6, wherein the antifouling layer has a thickness of 10 µm to 1000 µm.

8. The aquatic organism adherence preventive film as recited in any one of claims 1 to 7, wherein the pressure-sensitive adhesive layer has a thickness of 1 µm to 1000 µm.

9. The aquatic organism adherence preventive film as recited in any one of claims 1 to 8, wherein the water contact angle with respect to the antifouling layer as measured after 5 minutes have elapsed since operation of causing the antifouling layer to be in contact with methanol for 20 minutes, and then dropping water on the antifouling layer is 75 degrees or less.

10. The aquatic organism adherence preventive film as recited in any one of claims 1 to 9, wherein the water contact angle with respect to the antifouling layer as measured after 5 minutes have elapsed since operation of causing the antifouling layer to be in contact with methanol for 20 minutes, and then dropping water on the antifouling layer is 70 degrees or less.

11. The aquatic organism adherence preventive film as recited in any one of claims 1 to 10, wherein the ratio of the tensile breaking strength (N/20 mm) as measured after immersion in pure water at 60°C for 4 days to the adhesive force (N/20mm) with respect to the underwater structure, as measured after immersion in pure water at 60°C for 4 days, is 2.0 or more.
